Europäisches Patentamt

European Patent Office

Office européen des brevets

(19)

(11) **EP 1 418 778 A1**

(12) **EUROPEAN PATENT APPLICATION**

(43) Date of publication:
**12.05.2004   Bulletin 2004/20**

(51) Int Cl.⁷: **H04Q 7/36**

(21) Application number: **03364029.3**

(22) Date of filing: **05.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **08.11.2002  FR 0214144
20.08.2003  FR 0310033**

(71) Applicant: **Melco Mobile Communications Europe
(SA)
35510 Cesson Sévigné (FR)**

(72) Inventors:
• **Bellec, Martial, Melco Mobile Communications
35576 Cesson Sevigne (FR)**
• **Belaiche, Vincent Antoine Victor , Melco Mobile
35576 Cesson Sevigne (FR)**
• **Voyer, Nicolas, Melco Mobile Communications
35576 Cesson Sevigne (FR)**

(74) Representative: **Bentz, Jean-Paul
Cabinet Ballot
4 rue du Général Hoche
BP 855
56100 Lorient (FR)**

(54) **Method of reducing dead zones within a mobile telecommmunication system, corresponding mobile telecommunication system and mobile station**

(57)     The present invention relates to a method and a system for reducing the dead zones within a third generation mobile telecommunication system (UMTS). When a mobile station (MS) communicating with a service base station (BS₁) comprised within a first access network generates a dead zone on at least one uplink of a next base station (BS₂) comprised within a second access network, the first and second access networks being separate and independent, criteria are determined, according to the invention, based on parameters regarding the uplink and/or downlink between the mobile station (MS) and the service base station (BS₁) and the next base station (BS2), if they are not complied with for the uplink and/or downlink, the mobile station (MS) interrupts the radio uplink and/or downlink implemented between the mobile station (MS) with its service base station (BS1). When the power transmitted on the uplink becomes zero, the degradation in the radio coverage of the cell associated with the next base station (BS₂) due to the mobile station (MS) disappears.

FIG.1

EP 1 418 778 A1

**Description**

The present invention relates to a method and a system for reducing the dead zones within a third generation mobile telecommunication system such as the universal mobile telecommunication system (or UMTS standing for Universal Mobile Telecommunication System).

In mobile telecommunication systems using wideband spread spectrum radio transmission technology such as the W-CDMA (standing for Wideband-Code Division Multiple Access) technology, a dead zone is characterised by the reducing of the radio coverage of a given radio cell associated with a given base station due to radio interference.

This situation typically occurs when a W-CDMA type mobile station maintains a duplex radio service with a remote base station having a nominal radio coverage, hereinafter termed service cell. If the physical radio links, termed links for the sake of simplicity in the remainder of the present description, downlink(s) and uplink(s), actually physically maintained on the air link, between the mobile station and the remote base station are sufficiently robust to maintain this duplex service, this implies that the mobile station generates interference on the uplink of one or more cells located in the vicinity of the mobile station. Thus, the useful Signal-To-Interference ratio, denoted S/I, of all the mobile stations maintaining a link within one of the next perturbed cells, is degraded by the interference due to the uplink between the mobile station and the base station denoted service station. Radio link is understood to mean "logical radio link", that is to say, the radio link consists of one or more uplinks and/or downlinks. The further the mobile station is from its service cell the greater is this interference. When this interference becomes too strong, the mobile station re-enters a so-called blinding zone. The blinding zone is thus defined as being a zone where the uplink(s) of the mobile station become(s) disturbing for the base station of any next cell interfered. The radio coverage of any next cell varies according to the strength of this interference. The cell is then said to "breathe". Specifically, it contracts when an interfering mobile station enters the blinding zone, and dilates when the mobile station leaves the blinding zone. The dead zone is then defined as being the difference between the radio coverage of the next cell when it does not suffer interference and when it does, or equivalently as the variation in radio coverage of the next cell when it is interfered. This variation defines a geographical zone where the quality of the radio link cannot be guaranteed. One speaks of the uplink dead zone since it affects the uplink(s) of any interfered next cell.

When the mobile station has moved away from the service cell, the mobile station is liable to approach one or more next cells. The base station of any next cell generates, for the mobile station, interference that gradually degrades the downlink(s) between the service base station and the mobile station. When this degradation becomes too great, the mobile station is said to re-enter a so-called downlink blinding zone relating to the base station of any next cell causing interference.

Moreover, due to the generation by the next base station(s) of interference on the downlink(s) between the service base station and the mobile station, there appears, among other things, a downlink dead zone relating to the service base station. The downlink dead zone may then be defined as being the variation in the radio coverage of a service cell interfered (by the signals transmitted by the relevant next base station or stations).

The aim of the invention is to reduce the uplink and/or downlink dead zones within mobile telecommunication systems.

Hitherto, radio network planning has allowed effective reduction of the uplink and downlink dead zones in the following two cases.

In a first case, termed "single-operator intra-frequency" case, the service cell and the interfered next cells share the same frequencies and are operated in a manner harmonized by the same operator. In this case, the operator can supervise and therefore control all the cells to which a potential dead zone relates. In particular, it has the possibility of instructing, from its universal terrestrial radio access network (UTRAN standing for Universal Terrestrial Radio Access Network), the relevant mobile station to change service cell and to hand over one of the next cells. This handover can be carried out in a "soft" manner. One then speaks of "soft handover". The handover operation consists, firstly, in temporarily summing the signals coming from the initial service base station and the signals coming from one or more next base stations transmitting the same information and then, subsequently, in interrupting the radio link with the initial service base station and the next base stations except at least one of them, deemed to be too far away. The duplex service is then only maintained with the remaining next base station. This handover can be triggered when certain radio criteria are satisfied. These criteria can be parameterized and generally consist in verifying that the radio level received or one of its quality estimators satisfies threshold conditions or belongs to specific intervals.

In a second case, called the "single-operator inter-frequency" case, the service cell and the interfered next cells do not share the same frequencies but they are nevertheless operated in a manner harmonized by the same operator. Just as for the previous case, the operator can control all the cells to which a potential dead zone relates. In particular, it can, from its UTRAN network, instruct the mobile station to change service cell and to hand over the radio link to one of the next cells working on another frequency. This handover can be performed in a "hard" manner. One then speaks of "hard handover". This operation consists in, first of all, interrupting the radio link with the initial service base station, deemed to be too far away, then in re-establishing the radio link with a next base station. Communication is then interrupted briefly during the handover. This interruption originates from the fact that the mobile station generally cannot simultaneously maintain two radio links on two different frequencies. In a manner similar to "intra-frequency" handover, this handover can be triggered when certain radio criteria are satisfied. It should be noted that the "hard handover" mechanism can also be applied to the first case.

Apart from the two cases described above, current network planning does not allow to reduce the uplink and downlink dead zones. For example, in the case where the service cell and the next cells are operated by different operators, the handover techniques described above cannot be used for the following reasons:

- the networks of the operators are operated separately, in a distinct and nonharmonized manner, that is to say that no physical or logical, operational link exists between their respective fixed networks in order to implement all or some of the radio link handover techniques described above,
- from an economic point of view, the operator operating the current communication of the mobile station cannot allow handover thereof to another operator. Specifically, the current operator would lose income in favour of a competing operator.

In the subsequent description, this case will be termed "multi-operator intra-frequency" or "multi-operator inter-frequency" case depending on whether the service cell and the next cells do or do not share the same frequency respectively.

Likewise, in the "single-operator intra-frequency" or "single-operator inter-frequency" cases, if at least one of the next cells is operated in a manner which is not harmonized with the service cell, then we again have a case equivalent to the "multi-operator intra-frequency" or "multi-operator inter-frequency" case respectively. Such cases may be encountered in particular when one and the same zone groups together several different types of cells of one and the same operator, for example at least one pico-cell and one micro-cell, where each type of cell belongs to a separate network specific thereto. It is recalled that a pico-cell corresponds to a cell of a radius of a few tens of metres whereas a micro-cell corresponds to a cell of a radius of a few hundred metres.

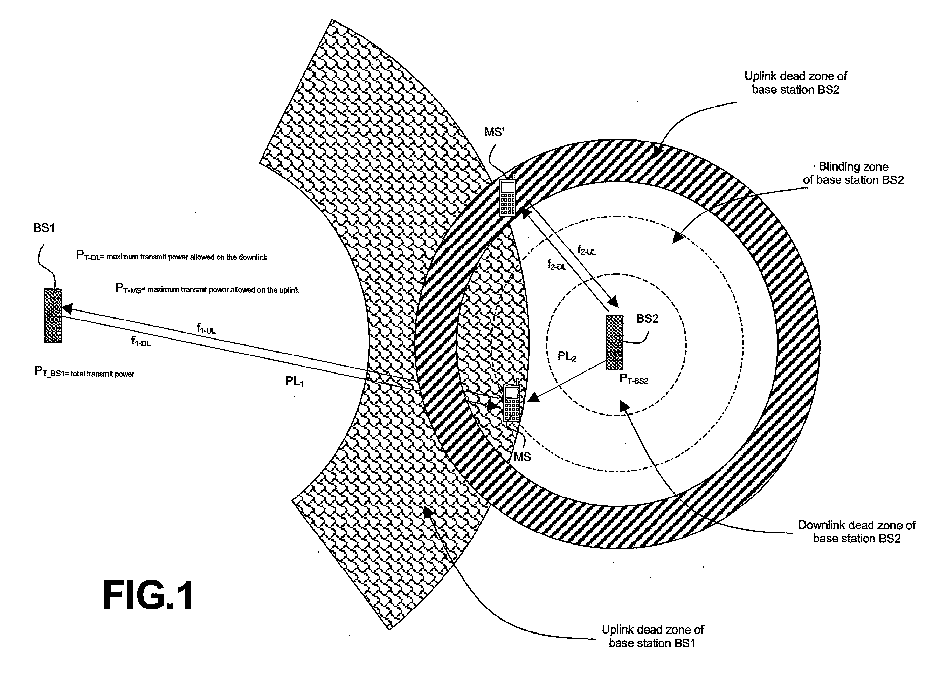

The "multi-operator inter-frequency" case is illustrated in Figure 1. In this figure, a mobile station MS maintains a radio link with a service base station $BS_1$ on a frequency $f_{1-UL}$ for the uplink (namely from the mobile station MS to the base station $BS_1$). The base station $BS_1$ transmits radio signals, when the mobile station MS is located within a cell termed the associated service cell, with a total transmit power (that is to say the sum of all the transmit powers of the downlinks of the base station $BS_1$ with all the mobile stations in its service cell) $P_{T\_BS_1}$ on a frequency $f_{1-DL}$ of the downlink (namely from the base station $BS_1$ to the mobile station MS). The power dedicated to the radio link from the base station $BS_1$ to the mobile station MS is limited to a maximum level $P_{T-DL}$ less than the total transmit power $P_{T\_BS_1}$. The power attenuation losses $PL_1$ due to the propagation (or "path loss") of the signals transmitted from the base station $BS_1$ to the mobile station MS on the frequency $f_{1-DL}$ of the downlink are measured by the mobile station MS. Likewise, the power attenuation losses $PL_2$ due to the propagation (or "path loss") of the signals transmitted from the next base station $BS_2$ to the mobile station MS on another frequency $f_{2-DL}$ of a downlink used for another communication are measured by the mobile station MS.

The mobile station MS approaches a next base station $BS_2$ communicating with another mobile station MS'. This mobile station MS', located within a cell being next to the service cell, communicates with the next base station $BS_2$ on a frequency $f_{2-UL}$ of the uplink (namely from the mobile station MS' to the base station $BS_2$). It is assumed, in connection with Figure 1, that, as defined in an W-CDMA telecommunication system, the frequencies $f_{1-UL}$, $f_{2-UL}$, $f_{1-DL}$, $f_{2-DL}$ of the uplinks and downlinks relating to the service cell and the next cell respectively are different taken pairwise. The next base station $BS_2$ transmits radio signals, when the other mobile station MS' is located within the service cell associated with the next base station $BS_2$, with a total transmit power $P_{T\_BS_2}$ (that is to say the sum of all the transmit powers of the downlinks of the next base station $BS_2$ with all the mobile stations in its service cell) on a frequency $f_{2-DL}$ of the downlink (namely from the next base station $BS_2$ to the other mobile station MS').

As the mobile station MS currently communicating approaches the next base station $BS_2$ and moves away from the service base station $BS_1$, the power attenuation losses $PL_1$ due to the propagation of the signals transmitted from the service base station $BS_1$ to the mobile station MS increase. Also, in order to maintain a sufficient level of reception of the downlink for the mobile station MS, the service base station $BS_1$ transmits more strongly the signal dedicated to the mobile station MS on the frequency $f_{1-DL}$ of the downlink, all conditions being equal otherwise. In other words, the transmit power at the frequency $f_{1-DL}$ of the downlink relating to the base station $BS_1$, dedicated to the service link, when the mobile station MS is located outside the service cell, increases gradually and reaches a maximum allowed level $P_{T-DL}$. Likewise, the mobile station MS maintains a sufficient level of reception of the uplink for the base station $BS_1$ by transmitting more strongly on the frequency $f_{1-UL}$ of the uplink. In other words, the transmit power on the frequency $f_{1-UL}$ from the mobile station MS to the service base station $BS_1$ increases up to a maximum allowed level $P_{T\_MS}$. Also, as the power attenuation losses due to the propagation of the signals transmitted at a frequency $f_{2-UL}$ from the mobile station MS to any next base station $BS_2$ decrease as the mobile station MS approaches the base

station BS$_2$, the power level of the signals received by the next base station BS$_2$ on the frequency f$_{1\text{-UL}}$ of the uplink between the mobile station MS and the service base station BS$_1$ increases.

No problem would exist if, given that the service cell operates with uplink and downlink frequencies f$_{1\text{-UL}}$ , f$_{1\text{-DL}}$ and that the next cell operates with respectively different uplink and downlink frequencies f$_{2\text{-UL}}$ , f$_{2\text{-DL}}$, the behaviour of the radiofrequency elements of the mobile station MS and of the next base station BS$_2$ were ideal. However, it appears that a portion of the power to be transmitted by the mobile station MS on the frequency f$_{1\text{-UL}}$ of the uplink relating to the service cell may be received by the next base station BS$_2$ as interference on the adjacent frequency f$_{2\text{-UL}}$ of the uplink relating to the next cell. Transmission and reception leakages may in fact exist. The transmitter of the mobile station MS may, on the one hand, generate leakages on the adjacent bands, but these "inter-frequency" leakages are limited by a parameter denoted ACLR (standing for Adjacent Channel Leakage power Ratio) relating to a rejection rate on adjacent channels in transmission from the mobile station MS. This parameter is defined in 3GPP recommendation TS 25.101. Unless indicated to the contrary, the passages of the 3GPP recommendations to which reference will be made subsequently belong to the 3GPP recommendations in their version of September 2002, editions 99, 4, 5 and 6. The receiver of the next base station BS$_2$ can, on the other hand, receive energy not only of the desired band but also of an adjacent band, given that the reception filtering is not ideal. This defect is limited by a parameter denoted ACS (standing for Adjacent Channel Selectivity) relating to a selectivity rate of the adjacent channels in reception by the next base station BS$_2$. This parameter is defined in 3GPP recommendation TS 25.104.

Consequently, on the uplink between the other mobile station MS' and the base station BS$_2$ using the uplink frequency denoted f$_{2\text{-UL}}$, the interference I$_{MS\text{->}BS2}$ received by the base station BS$_2$ and generated by the mobile station MS is equal to:

$$I_{MS\text{->}BS_2} = P_{T\_MS} \cdot PL_2 \cdot 10^{\frac{ACIR_{UL}}{10}} \qquad (1)$$

where:

-   PL$_2$ represents the power attenuation losses due to the propagation of the signals between the mobile station MS and the next base station BS$_2$ on the uplink frequency f$_{2\text{-UL}}$ and is negative. This quantity is negative when it is expressed in dB. These attenuation losses are defined, except for the sign if they are expressed in dB as detailed later, in 3GPP recommendation 25.331,
-   P$_{T\_MS}$ is the transmit power of the mobile station MS to the service base station BS$_1$,
-   

$$ACIR_{UL\_dB} = 10 \cdot \log_{10}(10^{\frac{-ACLR_{MS\_dB}}{10}} + 10^{\frac{-ACS_{BS_2\text{-}dB}}{10}}) < 0 \; ;$$

where:

-   *ACLR$_{MS}$* (ACLR$_{MS\_dB}$>0) is a rejection rate on adjacent channels in transmission from the mobile station MS, and
-   ACS$_{BS_2}$ (ACS$_{BS_2\_dB}$ >0) is a selectivity rate of the adjacent channels in reception by the next base station BS$_2$.

In the same manner, on the downlink between the base station BS$_1$ and the mobile station MS using the downlink frequency denoted f$_{1\text{-DL}}$, the interference I$_{BS2\text{->}MS}$ received by the mobile station MS and generated by the base station BS$_2$ is equal to:

$$I_{BS_2\text{->}MS} = P_{T\_BS_2} \cdot PL_2 \cdot 10^{\frac{ACIR_{DL}}{10}} \qquad (2)$$

with

$$ACIR_{DL\_dB} = 10 \cdot \log_{10}(10^{\frac{-ACLR_{BS_2}}{10}} + 10^{\frac{-ACS_{MS}}{10}}) < 0 \; ;$$

where:

- ACLR$_{BS_2}$ (ACLR$_{BS_2\_dB}$ >0) is a rejection rate on adjacent channels in transmission from the next base station BS$_2$, and
- $ACS_{MS}$ ($ACS_{MS\_dB}$>0) is a selectivity rate of the adjacent channels in inter-frequency reception by the mobile station MS.

As the mobile station MS approaches the base station BS$_2$, the interference $I_{BS2->MS}$ generated by the next base station BS$_2$ on the mobile station MS and $I_{MS->BS2}$ conversely increase. In Figure 1, the uplink blinding zone relating to the mobile station MS generated by the mobile station MS to the next base station BS$_2$ is bordered by a chain-dotted circle around the latter station. The uplink dead zone generated by the mobile station MS on the uplinks of the base station BS$_2$, hence relating to the base station BS$_2$, is represented by a hatched ring and is representative of the "breathing" of the zone of coverage of the next base station BS$_2$. The continuous-line outer circle of the hatched ring corresponds to the nominal zone of coverage of the base station BS$_2$ associated with the total transmit power P$_{T-BS_2}$, in the absence of the mobile station MS. In this example, since the mobile station MS transmits in the uplink blinding zone, the mobile station MS' located in the uplink dead zone is thus no longer able to maintain a communication with the base station BS$_2$. The downlink blinding zone relating to the next base station BS$_2$ generated by the next base station BS$_2$ on the downlinks of the service base station BS$_1$ is indicated by a dashed circle in Figure 1. Furthermore, a downlink dead zone relating to the service base station BS$_1$ and generated by the downlink of the next base station BS$_2$ with the other mobile station MS' is defined as being the variation in the radio coverage of the service cell BS$_1$ interfered by the next base station BS$_2$. This variation is represented by a ring exhibiting lines in the form of "tiles" and, in a manner similar to the uplink dead zone, is representative of the breathing of the coverage of the cell of the service base station BS$_1$.

In this example, the uplink blinding zone is larger than the downlink blinding zone. The converse case is also possible.

The object of the invention is to propose a method making it possible to reduce the uplink and/or downlink dead zones in the "multi-operator inter- or intra-frequency" or equivalent cases, that is to say within a zone where several next base stations are operated by respective networks with no operational link between them allowing the implementation of the conventional techniques in particular of radio link handover.

According to the invention, it is proposed that an operator configures its fleet of mobile stations so that the communications generated by a configured mobile station do not impede the communications within a(the) cell(s) being next to a cell operated by the operator, the next cell(s) being, for its (their) part, possibly operated by at least one other operator. Thus, as soon as a mobile station is liable to create an uplink dead zone at the level of a cell being next to the cell associated (also referred to as the service cell) with the base station with which it is communicating, there is provision, according to the invention, to interrupt the radio link between this mobile station and its service station by interrupting the uplink and/or the downlink.

The invention proposes a method of reducing at least one dead zone relative to at least one base station and/ or at least one second base station, said at least one second base station being next to said first base station, said first base station being comprised within a first access network, said second base station being comprised within a second access network, said first and second access networks being separate and independent ; when a first mobile station, currently communicating on at least one first frequency with said first base station, approaches said second base station communicating with at least one other mobile station, referred to as a second mobile station, communicating with said second base station on at least one second frequency, said method comprises the following steps of:

- estimation, by said first mobile station, of at least one first and/or one second parameters, said first parameter being representative of the quality of reception of the signals transmitted by said first base station and received by said first mobile station on a third frequency, said second parameter being representative of the quality of reception of the signals transmitted by said second base station and received by said first mobile station on a fourth frequency,
- determination, at least by said first mobile station, of a third parameter, said third parameter being dependent on said at least one first estimated parameter and/or one second estimated parameter,
- comparison of the value of said third determined parameter with a first predetermined threshold value, said first threshold value being representative of a dead zone on the uplink between said second mobile station and said second base station for at least said second frequency, said uplink dead zone relating to said at least one second base station, and/or
- comparison of the value of said third determined parameter with a second predetermined threshold value, said second threshold value being representative of a dead zone on the downlink between said first base station and said first mobile station for at least said third frequency, said dead zone being referred to as a downlink dead zone, said downlink dead zone relating to at least said first base station, and, if the value of said third parameter exceeds said first threshold value and/or said second threshold value, said first mobile station interrupts the radio link implemented on at least said first frequency and/or said third frequency between said first mobile station and said first base station.

Thus, by interrupting the radio link between the mobile station currently communicating and its service station, the power transmitted from the first mobile station MS to the first base station $BS_1$ becomes zero and the degradation of the radio coverage of the cell associated with the second base station $BS_2$ due to the first mobile station MS disappears.

The first, second and third parameters may in particular be expressed in many ways, according, among other things, to several types of unit. According to a first embodiment, when these reception quality parameters are expressed according to a unit in dB or in dBm, the third parameter may in particular be representative of a difference, expressed in dB, between the first and second estimated parameters, such as the so-termed geometry factor. It is recalled that a difference or an addition expressed in dB corresponds to a ratio or a product linear-wise respectively. According to such an embodiment, if the value of the third parameter exceeds the first threshold value representative of an uplink dead zone and/or the second threshold value representative of a downlink dead zone, then the mobile station interrupts the uplink(s) and/or downlink(s) with the service base station.

Whatever the embodiment of the invention, the term "to exceed" in the expression "if the value of the third parameter exceeds the first and/or second threshold value(s)" is understood to mean to become less than or greater than each threshold value to be taken into account.

Thus, due in particular to the diversity in which the first, second and third parameters may be expressed, the person skilled in the art will readily understand that there are multiple embodiments of the invention.

Within the framework of the W-CDMA telecommunication system, the first mobile station and the service base station communicate on the first frequency $f_{1-UL}$ for the uplink and on the third frequency $f_{1-DL}$ for the downlink, where the third frequency corresponds to the frequency paired with the first frequency. Moreover, in other telecommunication systems (such as W-CDMA 2000 and asymmetric W-CDMA), the third frequency is not the frequency paired with the first frequency but another predetermined frequency altogether.

Before specifying other advantageous characteristics of the invention, a few technical terms used subsequently are now spelled out so as to facilitate their identification by a person skilled in the art.

CPICH is used to stand for "Common PIlot Channel".

PCCPCH is used to stand for "Primary Common Control Physical Channel".

According to one embodiment of the method of the invention, said first and second estimated parameters are expressed according to one and the same type of measurement, said type of measurement belonging to the group comprising:

o     a measurement specific to a predetermined first physical channel of the mean energy received per chip, divided by the power spectral density of the interference received in a corresponding radio band, referred to as a first measurement, expressed in dB and defined under the reference CPICH-Ec/No in 3GPP recommendation TS 25.215;

o     a measurement specific to said predetermined first physical channel of the power of the signal received for a predetermined code of said first physical channel, referred to as a second measurement defined under the reference CPICH-RSCP (RSCP standing for Received Signal Code Power) in 3GPP recommendation TS 25.215, and expressed in dBm, or in mW;

o     a measurement specific to a predetermined second physical channel of the power of the signal received for a predetermined code of said second physical channel, referred to as a third measurement defined under the reference PCCPCH-RSCP, in 3GPP recommendation TS 25.215, and expressed in dBm, or in mW; and

o     a measurement of power attenuation losses due to the propagation of the signals transmitted, referred to as a fourth measurement, expressed in dB.

The measurement of attenuation losses due to the propagation of the signals transmitted is defined in particular in paragraph 14.2.0a of the RRC 3GPP recommendation TS 25.331 as follows:

Propagation losses in dB = Transmit power of the primary CPICH channel in dB = CPICH-RSCP in dB

It should be noted that in the remainder of the present description, the power attenuation losses due to the propagation of the signals transmitted, denoted by the reference PL (standing for "path loss"), conform with this definition, apart from the sign, when this magnitude is expressed in dB. This is a different notational convention so as to definitely have $PL_{dB} < 0$, that is to say a negative gain due to the power attenuation losses due to the propagation of the signals transmitted by the relevant base station. This does not however change anything in the physical significance of the parameter PL defined in 3GPP TS 25.331.

When said type of measurement is said fourth measurement (denoted PL), said first threshold value is determined in accordance with the following formula:

$$T_{target\_UL\_dB} = PL_{target\_UL\_dB} - H1_{UL\_dB} - H2_{UL\_dB}$$

$$= (EC/I0)_{UL\_dB} + I_{BS_1\_dBm} - I_{BS_2\_dBm} - x_{dB} + ACIR_{UL\_dB} - H1_{UL\_dB} -$$

$$H2_{UL\_dB};$$

where:

- $PL_{target\_UL}$ is a parameter representative of the power attenuation losses due to the propagation of the signals transmitted on the uplink determined in accordance with the following formula:

$$PL_{target\_UL\_dB} = \left(\frac{Ec}{I0}\right)_{UL\_dB} + I_{BS_1\_dBm} - I_{BS_2\_dBm} - x_{dB} + ACIR_{UL\_dB} ;$$

where:

-

$$\left(\frac{Ec}{I0}\right)_{UL}$$

is a service quality objective on the uplink from said first mobile station,
- $I_{BS_1}$ is a total level of interference on the cell served by said first base station,
- $I_{BS_2}$ is a total level of interference on the cell served by said second base station,
- $x$ is an uplink dead zone reduction parameter,
- $ACIR_{UL}$ is a rate of interference on adjacent channels on the uplink determined in accordance with the following formula:

$$ACIR_{UL\_dB} = 10 \cdot log_{10}(10^{\frac{-ACLR_{MS\_dB}}{10}} + 10^{\frac{-ACS_{BS_2}-dB}{10}}) < 0 ;$$

- $ACLR_{MS}$ is a rate of rejection on adjacent channels in transmission from said first mobile station, and
- $ACS_{BS_2}$ is a rate of selectivity of the adjacent channels in reception by said second base station,
- $H1_{UL}$ and $H2_{UL}$ are hysteresis parameters relating to the uplink of said first and second base stations respectively, said hysteresis parameters being intended to provide a triggering margin for the calculation of said first threshold value; and/or

said second threshold value is determined in accordance with the following formula:

$$T_{target\_DL\_dB} = PL_{target\_DL\_dB} - H1_{DL\_dB} - H2_{DL\_dB}$$

$$= (Ec/I0)_{DL\_dB} + P_{T\_BS_2\_dBm} - P_{T\_DL\_dBm} + ACIR_{DL\_dB} - z_{dB} - H1_{DL\_dB} -$$

$$H2_{DL\_dB};$$

where:

- $PL_{target\_DL}$ is a parameter representative of the power attenuation losses due to the propagation of the signals transmitted on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_dB} - z_{dB} \; ;$$

where:

- 

$$\left(\frac{Ec}{I0}\right)_{DL}$$

is a service quality objective on the downlink to said first mobile station,
- $P_{T\_BS_2}$ is a level of total power transmitted on the cell served by said second base station,
- $P_{T\_DL}$ is a maximum level of transmit power, by said first base station, allowed on the downlink between said first mobile station and said first base station,
- z is a downlink dead zone parameter,
- $H1_{DL}$ and $H2_{DL}$ are hysteresis parameters relating to the downlink of said first and second base stations respectively, said hysteresis parameters being intended to provide a triggering margin for the calculation of said second threshold value; and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\_dB}}{10}}) \; ;$$

where:

- $ACLR_{BS_2}$ is a rate of rejection on adjacent channels in transmission from said second base station, and
- $ACS_{MS}$ is a rate of selectivity of the adjacent channels in reception by said first mobile station.

When said type of measurement is said third measurement, said first threshold value ($T_{target\_UL}$) is determined in accordance with the following formula:

$$T_{target\_UL\_dB} = PCCPCH\_RSCP_{target\_UL\_dB} - H1_{UL\_dB} - H2_{UL\_dB}$$

$$= PL_{target\_UL\_dB} + TX\_PCCPCH_{BS_1\_dBm} - TX\_PCCPCH_{BS_2\_dBm} - H1_{UL\_dB}$$

$$H2_{UL\_dB;}$$

where:

- $TX\_PCCPCH_{BS_1}$ is a level of transmit power of said second physical channel from said first base station,
- $TX\_PCCPCH_{BS_2}$ is a level of transmit power of said second physical channel from said second base station,
- $H1_{UL}$ and $H2_{UL}$ are hysteresis parameters relating to the uplink of said first and second base stations respectively, said hysteresis parameters being intended to provide a triggering margin for the calculation of said first threshold value,
- $PL_{target\_UL}$ is a parameter representative of the power attenuation losses due to the propagation of the signals transmitted on the uplink determined in accordance with the following formula:
- 

$$PL_{target\_UL\_dB} = \left(\frac{Ec}{I0}\right)_{UL\_dB} + I_{BS_1\_dBm} - I_{BS_2\_dBm} - x_{dB} + ACIR_{UL\_dB};$$

where:

- 

$$\left(\frac{Ec}{I0}\right)_{UL}$$

is a service quality objective on the uplink from said first mobile station,
- $I_{BS_1}$ is a total level of interference on the cell served by said first base station,
- $I_{BS_2}$ is a total level of interference on the cell served by said second base station,
- x is an uplink dead zone reduction parameter,
- $ACIR_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS_2\text{-}dB}}{10}}) < 0 \ ;$$

where:

- $ACLR_{MS}$ is a rate of rejection on adjacent channels in transmission from said first mobile station, and
- $ACS_{BS_2}$ is a rate of selectivity of the adjacent channels in reception by said second base station; and/or

said second threshold value is determined in accordance with the following formula:

$$T_{target\_DL\_dB} = PCCPCH\_RSCP_{target\_DL\_dB} - H1_{DL\_dB} - H2_{DL\_dB}$$

$$= PL_{target\_DL\_dB} + TX\_PCCPCH_{BS1\_dBm} - TX\_PCCPCH_{BS2\_dBm} - H1_{DL\_dB} - H2_{DL\_dB};$$

where:

- $H1_{DL}$ and $H2_{DL}$ are hysteresis parameters relating to the downlink of said first and second base stations respectively, said hysteris paameters being intended to provide a triggering margin for the calculation of said second threshold value,
- $PL_{target\_DL}$ is a parameter representative of the power attenuation losses due to the propagation of the signals transmitted on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_dB} - z_{dB};$$

where:

-

$$\left(\frac{Ec}{I0}\right)_{DL}$$

is a service quality objective on the downlink to said first mobile station,
- $P_{T\_BS_2}$ is a level of total power transmitted on the cell served by said second base station,
- $P_{T\_DL}$ is a maximum level of transmit power, by said first base station, allowed on the downlink between said first mobile station and said first base station,
- z is a downlink dead zone parameter, and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\_dB}}{10}}) \ ;$$

where:

- $ACLR_{BS_2}$ is a rate of rejection on adjacent channels in transmission from said second base station, and
- $ACS_{MS}$ is a rate of selectivity of adjacent channels in reception by said first mobile station.

When said type of measurement is said second measurement, said first threshold value is determined in accordance with the following formula:

$$T_{target\_UL\_dB} = CPICH\_RSCP_{target\_UL\_dB} - H1_{UL\_dB} - H2_{UL\_dB}$$

$$= PL_{target\_UL\_dB+} TX\_CPICH_{BS_1\_dBm} - TX\_CPICH_{BS_2\_dBm} - H1_{UL\_dB} - H2_{UL\_dB},$$

where:

- $TX\_CPICH_{BS_1}$ is a level of transmit power of said first physical channel from said first base station,
- $TX\_CPICH_{BS_2}$ is a level of transmit power of said first physical channel from said second base station,
- $H1_{UL}$ and $H2_{UL}$ are hysteresis parameters relating to the uplink of said first and second base stations respectively, said hysteresis parameters being intended to provide a triggering margin for the calculation of said first threshold value,
- $PL_{target\_UL}$ is a parameter representative of the power attenuation losses due to the propagation of the signals on the uplink determined in accordance with the following formula:
-

$$PL_{target\_UL\_dB} = \left(EC_{\overline{I0}}\right)_{UL\_dB} + I_{BS_1\_dBm} - I_{BS_2\_dBm} - x_{dB} + ACIR_{UL\_dB} \ ;$$

where:

-

$$\left(\frac{Ec}{I0}\right)_{UL}$$

is a service quality objective on the uplink from said first mobile station,
- $I_{BS_1}$ is a total level of interference on the cell served by said first base station,
- $I_{BS_2}$ is a total level of interference on the cell served by said second base station,
- x is an uplink dead zone reduction parameter,
- $ACIR_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS_2}\text{-}dB}{10}}) < 0 \ ;$$

where:

- $ACLR_{MS}$ is a rate of rejection on adjacent channels in transmission from said first mobile station, and
- $ACS_{BS_2}$ is a rate of selectivity of adjacent channels in reception by said second base station; and/or

said second threshold value is determined in accordance with the following formula:

$$T_{target\_DL\_dB} = CPICH\_RSCP_{target\_DL\_dB} - H1_{DL\_dB} - H2_{DL\_dB}$$

$$= PL_{target\_DL\_dB+} TX\_CPICH_{BS_1\_dBm} - TX\_CPICH_{BS_2\_dBm} - H1_{DL\_dB} - H2_{DL\_dB},$$

where:

- $H1_{DL}$ and $H2_{DL}$ are hysteresis parameters relating to the downlink of said first and second base stations respectively, said hysteresis parameters being intended to provide a triggering margin for the calculation of said second threshold value,
- $PL_{target\_DL}$ is a parameter representative of the power attenuation losses due to the propagation of the signals transmitted on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_DB} - z_{dB} \; ;$$

where:

- 
$$\left(\frac{Ec}{I0}\right)_{DL}$$

is a service quality objective on the downlink to said first mobile station,
- $P_{T\_BS_2}$ is a level of total power transmitted on the cell served by said second base station,
- $P_{T\_DL}$ is a maximum level of transmit power, by said first base station, allowed on the downlink between said first mobile station and said first base station,
- z is a downlink dead zone parameter, and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\_dB}}{10}}) \; ;$$

where:

- $ACLR_{BS_2}$ is a rate of rejection on adjacent channels in transmission from said second base station, and
- $ACS_{MS}$ is a rate of selectivity of adjacent channels in reception by said first mobile station.

When said type of measurement is said first measurement, said first threshold value is determined in accordance with the following formula:

$$T_{target\_UL\_dB} = CPICH\_EC/N0_{target\_UL\_dB} - H1_{UL\_dB} - H2_{UL\_dB}$$

$$= PL_{target\_UL\_dB} + TX\_CPICH_{BS_1\_dBm} - TX\_CPICH_{BS_2\_dBm} - (RSSI_{BS_1\text{-}dBm} - $$

$$RSSI_{BS_2\_dBm}) - H1_{UL\_dB} - H2_{UL\_dB};$$

where:

- $TX\_CPICH_{BS_1}$ is a level of transmit power of said first physical channel from said first base station,
- $TX\_CPICH_{BS_2}$ is a level of transmit power of said first physical channel from said second base station,
- $RSSI_{BS_1}$ is a level of wideband power received from said first base station,
- $RSSI_{BS_2}$ is a level of wideband power received from said second base station,
- $H1_{UL}$ and $H2_{UL}$ are hysteresis parameters relating to the uplink of said first and second base stations respectively, said hysteresis parameters being intended to provide a triggering margin for the calculation of said first threshold value,
- $PL_{target\_UL}$ is a parameter representative of the power attenuation losses due to the propagation of the signals transmitted on the uplink determined in accordance with the following formula:
- 
$$PL_{target\_UL\_dB} = \left(\frac{Ec}{I0}\right)_{UL\_dB} + I_{BS_1\_dBm} - I_{BS_2\_dBm} - x_{dB} + ACIR_{UL\_dB} \; ;$$

where:

- 
$$\left(\frac{Ec}{I0}\right)_{UL}$$

is a service quality objective on the uplink from said first mobile station,

- $I_{BS_1}$ is a total level of interference on the cell served by said first base station,
- $I_{BS_2}$ is a total level of interference on the cell served by said second base station,
- x is an uplink dead zone reduction parameter,
- $ACIR_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS_2\text{-}dB}}{10}}) < 0 \; ;$$

where:

- $ACLR_{MS}$ is a rate of rejection on adjacent channels in transmission from said first mobile station, and
- $ACS_{BS_2}$ is a rate of selectivity of adjacent channels in reception by said second base station, and/or

said second threshold value is determined in accordance with the following formula:

$$T_{target\_DL\_dB} = CPICH\_EC/N0_{target\_DL\_dB} - H1_{DL\_dB} - H2_{DL\_dB}$$

$$= PL_{target\_DL\_dB} + TX\_CPICH_{BS_1\_dBm} - TX\_CPICH_{BS_2\_dBm} - (RSSI_{BS_1\_dBm} - RSSI_{BS_2\_dBm}) - H1_{DL\_dB} - H2_{DL\_dB};$$

where:

- $H1_{DL}$ and $H2_{DL}$ are hysteresis parameters relating to the downlink of said first and second base stations respectively, said hysteresis parameters being intended to provide a triggering margin for the calculation of said second threshold value,
- $PL_{target\_DL}$ is a parameter representative of the power attenuation losses due to the propagation of the signals on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_dB} - z_{dB} \; ;$$

where:

-

$$\left(\frac{Ec}{I0}\right)_{DL}$$

is a service quality objective on the downlink to said first mobile station,

- $P_{T\_BS_2}$ is a level of total power transmitted on the cell served by said second base station,
- $P_{T\_DL}$ is a maximum level of transmit power, by said first base station, allowed on the downlink between said first mobile station and said first base station,
- z is a downlink dead zone parameter, and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\_dB}}{10}});$$

where:

- $ACLR_{BS_2}$ is a rate of rejection on adjacent channels in transmission from said second base station, and

- ACS$_{MS}$ is a rate of selectivity of adjacent channels in reception by said first mobile station.

Preferably, the values of said hysteresis parameters relating to the uplink and/or to the downlink of said first and second base stations are not zero.

It is provided, preferably, that the method furthermore comprises a step of storing, by said first mobile station, a rate of rejection on adjacent channels in transmission from said first mobile station, said rate of rejection on adjacent channels being specific to said first mobile station, and a step of determination of said rate of interference on adjacent channels on the uplink in accordance with the following formula:

$$ACIR_{UL\_dB} = 10{\cdot}log_{10}(10^{\frac{-ACLR_{MS\_spec\_dB}}{10}} + 10^{\frac{-ACS_{BS_2\text{-}dB}}{10}}) < 0 \; ;$$

where ACS$_{BS_2}$ is a rate of selectivity of adjacent channels in reception by said second base station; and/or

- a step of storing, by said first mobile station, a rate of selectivity of adjacent channels in reception by said first mobile station, said rate of selectivity of adjacent channels being specific to said first mobile station, and a step of determination of said rate of interference on adjacent channels on the downlink in accordance with the following formula:

$$ACIR_{DL\_dB} = 10{\cdot}log_{10}(10^{\frac{-ACLR_{BS_2\_dB}}{10}} + 10^{\frac{-ACS_{MS\_spec\_dB}}{10}}) < 0 \; ;$$

where ACLR$_{BS_2}$ is a rate of rejection on adjacent channels in transmission from said second base station.

It is provided, advantageously, that said first base station transmits, to said first mobile station, a signal comprising at least one first configuration message for configuring said first mobile station, said first configuration message comprising at least one first information element, said at least one first information element being representative of at least one parameter belonging to the group comprising:

- said service quality objective on the uplink from said first mobile station;
- said total interference level allowed on the cell served by said first base station;
- said total interference level allowed on the cell served by said second base station;
- said uplink dead zone reduction parameter ;
- said rate of rejection on adjacent channels by said second base station in transmission from said first mobile station;
- said rate of selectivity of adjacent channels in reception by said second base station; and
- said first threshold value; and/or

in that said first base station transmits, to said first mobile station, a signal comprising at least one second configuration message for configuring said first mobile station, said second configuration message comprising at least one second information element, said at least one second information element being representative of at least one parameter belonging to the group comprising:

- said service quality objective on the downlink to said first mobile station;
- said level of total power transmitted on the cell served by said second base station;
- said maximum level of transmit power, by said first base station, allowed on the downlink between said first mobile station and said first base station;
- said downlink dead zone reduction parameter;
- said rate of selectivity of adjacent channels in reception by said first mobile station;
- said rate of rejection on adjacent channels in transmission from said second base station;
- said second threshold value; and
- a second maximum threshold value.

According to one embodiment, it is also provided that said first base station transmits, to said first mobile station, a signal comprising at least one third configuration message for configuring said first mobile station, said third configuration message comprising at least one third information element, said at least one third information element being representative of a first intermediate threshold value determined in accordance with the following formula:

$$T_{intermediary\_UL\_dB} = \left(\frac{Ec}{I0}\right)_{UL\_dB} + I_{BS_1\_dBm} - I_{BS_2\_dBm\_max} - x_{dB} \; ;$$

and

- the determination of said first threshold value comprises the addition, expressed in dB, by said first mobile station, of said rate of rejection on adjacent channels on the stored uplink and of said first intermediate threshold value; and/or

- said first base station transmits, to said first mobile station, a signal comprising at least one fourth configuration message for configuring said first mobile station, said fourth configuration message comprising at least one fourth information element, said at least one fourth information element being representative of a second intermediate threshold value determined in accordance with the following formula:

$$T_{intermediary\_DL\_dB} = (Ec/I0)_{DL\_dB} + P_{T\_BS_2\_dBm} - P_{T\_DL\_dBm} - z_{dB};$$

and

- the determination of said second threshold value comprises the addition, expressed in dB, by said first mobile station, of said rate of interference on adjacent channels in reception by said first mobile station, and of said second intermediate threshold value.

According to one embodiment, said first mobile station transmits, to said first base station, a signal comprising at least one fifth configuration message, said fifth configuration message comprising at least one fifth information element, said at least one fifth information element being representative of said rate of rejection on stored adjacent channels specific to said first mobile station, said first base station determines said first threshold value as a function of said specific rate of rejection on adjacent channels, and transmits said first threshold value to said first mobile station; and/or said first mobile station transmits, to said first base station, a signal comprising at least one sixth configuration message, said sixth message comprising at least one sixth information element, said at least one sixth information element being representative of said rate of selectivity of adjacent channels specific to said first mobile station, said first base station determines said second threshold value as a function of said specific rate of selectivity of adjacent channels, and transmits said second threshold value to said first mobile station.

Advantageously, at least said first threshold value and/or said second threshold value is split into at least first and/or second partial threshold values relating to said first and second base stations respectively, and whose difference, expressed in dB, is equal to said first and/or second threshold values respectively, said first base station transmits, to said first mobile station, a signal comprising at least one seventh configuration message for configuring said first mobile station, said seventh configuration message comprising at least one seventh information element, said at least one seventh information element being representative of at least one parameter belonging to the group comprising:

- said first partial threshold value relating to the uplink dead zone relating to said second base station;
- said first partial threshold value relating to the downlink dead zone relating to said first base station;
- said second partial threshold value relating to the uplink dead zone relating to said second base station;
- said second partial threshold value relating to the downlink dead zone relating to said first base station;
- a first maximum partial threshold value relating to the uplink dead zone relating to said second base station;
- a first maximum partial threshold value relating to the downlink dead zone relating to said first base station.

It should be noted that any threshold value, partial or otherwise, relating to a given base station can be determined as a function of the frequency or frequencies concerned. Thus, for example, the first partial threshold value relating to the first base station can be determined by considering the first frequency and/or the third frequency.

According to one embodiment, said seventh configuration message comprising said first maximum partial threshold value relating to said first frequency, said method comprises, furthermore, the following steps of:

- providing said first mobile station with said first threshold value;
- utilization, by said first mobile station, of said first maximum partial threshold value relating to the uplink dead zone relating to said second base station as first partial threshold value relating to the uplink dead zone relating to said second base station;

- determination, by said first mobile station, of said second partial threshold value relating to the uplink dead zone relating to said second base station; and/or said seventh configuration message comprises said first maximum partial threshold value relating to the downlink dead zone relating to said first base station, and said method comprises furthermore the following steps of:

  - providing said first mobile station with said second threshold value;
  - utilization, by said first mobile station, of said first maximum partial threshold value relating to the downlink dead zone relating to said first base station as first partial threshold value relating to the downlink dead zone relating to said first base station;
  - determination, by said first mobile station, of said second partial threshold value relating to the downlink dead zone relating to said first base station.

Preferably, said comparison step comprises the comparison of the value of said first and second parameters with said first and second partial threshold values relating to said first and second base stations respectively, said radio link implemented on at least said first frequency and/or said third frequency being interrupted:

  - when the value of said first parameter is less than said first partial threshold value relating to said downlink dead zone relating to said first base station and the value of said second parameter is greater than said second partial threshold value relating to said downlink dead zone relating to said first base station, and/or
  - when the value of said first parameter is less than said first partial threshold value relating to the uplink dead zone relating to said second base station and the value of said second parameter is greater than said second partial threshold value relating to the uplink dead zone relating to said second base station.

Advantageously, to carry out said comparison step, said first base station transmits, beforehand, to said first mobile station, a signal comprising an eighth configuration message for configuring said first mobile station, said eighth configuration message comprising at least one eighth information element, said at least one eighth information element being representative of at least one event relating to the interruption of said radio link between said first mobile station and said first base station, said at least one event belonging to the group comprising an event of type 1e, an event of type 1f, an event of type 2a, an event of type 2b, an event of type 2c, and an event of type 2d, these events being defined in 3GPP recommendation TS 25.331.

Preferably, to interrupt said radio link between said first mobile station and said first base station, said first mobile station triggers a radio link failure procedure.

According to one embodiment, said first mobile station interrupts said radio link with said first base station following the receipt of a signal, said signal comprising at least one ninth configuration message for configuring said first mobile station, said ninth configuration message comprising at least one ninth information element, said at least one ninth information element allowing said first mobile station to interrupt said radio link.

Advantageously, said method comprises, after the transmission of the signal comprising said eighth message and before the interruption of the radio link between said first base station and said first mobile station, a step comprising:

  - the transmission, from said first base station to said first mobile station, of at least one message belonging to the group comprising:

    - a radio bearer reconfiguration message;
    - a radio bearer release message;
    - a transport channel reconfiguration message; and
    - a physical channel reconfiguration message,

these messages being defined in 3GPP recommendation TS 25.331.

Preferably, to trigger said radio link failure procedure, said first base station transmits, beforehand, to said first mobile station, a signal comprising a tenth configuration message, said tenth configuration message comprising at least one tenth information element, the value of said at least one tenth information element being representative of the activation or of the non-activation of said radio link failure procedure.

Advantageously, said tenth configuration message comprises, furthermore, at least one eleventh information element, the value of said at least one eleventh information element being representative of the type of said at least one event triggering said radio link failure procedure.

According to one embodiment, the transmission to said first mobile station of said eighth configuration message relating to at least one event is carried out, if and only if, said first mobile station is present in a zone which is potentially an uplink dead zone relating to said second base station and/or a downlink dead zone relating to said first base station.

Advantageously, before interrupting said radio link between said first mobile station and said first base station, said first mobile station transmits, to said first base station, at least said first and second estimated parameters representative of the qualities of reception of the signals transmitted from said first and second base stations to said first mobile station on said third and fourth frequencies.

The subject-matter of the invention is also a mobile telecommunication system comprising a plurality of base stations and of mobile stations, in which at least one base station and at least one mobile station implement in order to communicate a frequency division duplex mode and/or the wideband code division multiple access technology, in which said mobile telecommunication system implements a method of reducing at least one dead zone relative to a first base station and/or at least one second base station as described hereinabove.

The invention relates moreover to a mobile station, referred to as a first mobile station, of the type comprising means for communicating with at least one first base station on at least one first frequency, at least one second base station being next to said first base station, said first base station being comprised within a first access network, said second base station being comprised within a second access network, said first and second access networks being separate and independent, wherein, at least one other mobile station, referred to as a second mobile station, communicates with said second base station on at least one second frequency, said first mobile station comprising means of:

- estimation of at least one first and/or one second parameters, said first parameter being representative of the quality of reception of the signals transmitted by said first base station and received by said first mobile station on a third frequency, said second parameter being representative of the quality of reception of the signals transmitted by said second base station and received by said first mobile station on a fourth frequency,
- determination of a third parameter, said third parameter being dependent on said at least one first estimated parameter and/or one second estimated parameter,
- comparison of the value of said third determined parameter with a predetermined first threshold value, said first threshold value being representative of a dead zone on the uplink between said second mobile station and said second base station for at least said second frequency, said dead zone being referred to as a uplink dead zone, said uplink dead zone relating to said at least one second base station, and/or
- comparison of the value of said third determined parameter with a predetermined second threshold value, said second threshold value being representative of a dead zone on the downlink between said first base station and said first mobile station for at least said third frequency, said dead zone being referred to as a downlink dead zone, said downlink dead zone relating to at least said first base station, and,
- if the value of said third parameter exceeds said first threshold value and/or said second threshold value, said first mobile station interrupts the radio link implemented on at least said first frequency and/or said third frequency between said first mobile station and said first base station.

Preferably, said first mobile station furthermore comprises:

- means of storing a rate of rejection on adjacent channels in transmission by said first mobile station, said rate of rejection on adjacent channels being specific to said first mobile station; and/or
- means of storing a rate of selectivity of the adjacent channels in reception by said first mobile station, said rate of selectivity of the adjacent channels being specific to said first mobile station.

Other characteristics and advantages of the invention will become apparent on reading the detailed description which follows and which is given with reference to the appended drawings, among which:

- Figure 1, already described, illustrates the "inter-frequency multi-operator" case;
- Figure 2 represents the operations to be carried out in the UTRAN network of the mobile station for the checking of a first criterion, in the particular case of a PL type measurement;
- Figure 3 represents the operations to be carried out in the UTRAN network of the mobile station for the checking of a second criterion, in the particular case of a PL type measurement; and
- Figure 4 represents the operations to be carried out in the mobile station in order to implement the method of the invention, in the particular case of a PL type measurement.

The invention will be more particularly described within the framework of Figure 1 ("multi-operator inter-frequency" case) without implying any limitation whatsoever on the scope of the invention to this case.

According to the invention, it is proposed that criteria based on parameters regarding the uplink(s) and/or the downlink(s) between the mobile station MS and the service base station $BS_1$ be defined which criteria, if they are not complied with, trigger a radio link failure procedure in the mobile station MS. The uplink(s) and/or downlink(s) between the mobile station MS and the base station $BS_1$ is/are then suspended. When the power transmitted on the uplink by the mobile station becomes zero, the degradation of the radio coverage of the cell associated with the next base station $BS_2$ due to the mobile station MS disappears.

Such an interruption of the radio link is in fact triggered by the mobile station of a given operator for the benefit of a plurality of mobile stations of another possible operator which are located in a zone covered by the two cells under consideration. This procedure being applied in a reciprocal manner by at least part of the fleet of mobile stations of the competing possible operator, it is then beneficial to the operator (or to the two operators) involved, since it produces a decrease in the reciprocal dead zones in the network(s) specific to the operator (or operators) concerned.

In the remainder of the present description, the following notation is used to describe the invention:

- ■ $P_{T\_MS}$ is the total power transmitted by the mobile station MS. This power is also the maximum power allowed for the service;
- ■ $P_{T\_BS1}$ is the total power transmitted by the base station $BS_1$; it depends on the total payload of the traffic planned on the base station $BS_1$;
- ■ $P_{T\_BS2}$ is the total power transmitted by the base station $BS_2$; it depends on the total payload of the traffic planned on the base station $BS_2$;
- ■ $P_{T\_DL}$ is a portion of $P_{T\_BS1}$ and represents the maximum transmit power permitted specifically on the downlink between the base station $BS_1$ and the mobile station MS;
- ■ $PL_1$ represents the power attenuation losses due to the propagation of the signals between the base station $BS_1$ and the mobile station MS on the frequency $f_{1-DL}$ of the downlink;
- ■ $PL_2$ represents the power attenuation losses due to the propagation of the signals between the next base station $BS_2$ and the mobile station MS on another frequency $f_{2-DL}$ of the downlink for another communication in progress;
- ■ $I_{MS->BS2}$ represents the level of the interference generated by the mobile station MS and received by the base station $BS_2$;
- ■ $I_{BS2->MS}$ represents the level of the interference generated by the base station $BS_2$ and received by the mobile station MS;
- ■ $I_{BS1->MS}$ represents the level of the interference generated by the base station $BS_1$ and received by the mobile station MS;
- ■ $I_{BS2}$ represents the total level received on the cell served by the base station $BS_2$;
- ■ $I_{BS1}$ represents the total level received on the cell served by the base station $BS_1$.

It should be noted that any parameter $G_i$ is written, within any equation, equality or inequality of the present patent document, $G_{i\_dB}$ or $G_{i\_dBm}$ depending on whether it is expressed in relative decibels or in radio power decibels (on the basis of a milliwatt) respectively.

Determination of an uplink dead zone criterion on the uplink between the mobile station MS and the base station $BS_1$

As shown in Figure 1, when the mobile station MS approaches the next base station $BS_2$, it gradually increases the interference level on the base station $BS_2$. This leads to a reduction in the size of the cell of the station $BS_2$, gradually excluding the mobile stations MS' at the limit of radio coverage of this cell which maintain a service with it. These mobile stations MS' then handover to other next cells, potentially causing situations of congestion of these cells.

Hereinafter, the uplink dead zone effect introduced by the uplink of the mobile station MS is characterised. Let us consider, for example, that the level of interference of the base station $BS_2$ is increased by y dB by the uplink of the mobile station MS. This increase degrades the radio coverage of the cell of the next base station $BS_2$.

The interference level $I_{MS->BS2}$ received by the base station $BS_2$ and generated by the mobile station MS can be expressed as a function of the total level of interference $I_{BS_2}$ received by the base station $BS_2$:

$$I_{MS->BS_2} = I_{BS_2} \cdot (10^{\frac{y}{10}} - 1) = \kappa \cdot I_{BS_2} \tag{3}$$

with

$$y\_dB = 10\log_{10}(1 + \kappa)$$

Combination of equations (1) and (3) then gives:

$$P_{T\_MS} = \frac{x \cdot I_{BS_2}}{PL_2} \cdot 10^{\frac{ACIR_{UL}}{10}} \tag{4}$$

Now, the transmit power $P_{T\_MS}$ of the mobile station is controlled in such a way that the quality objective of the uplink, denoted

$$\left(\frac{Ec}{Io}\right)_{UL},$$

between the mobile station MS and the base station BS$_1$ is greater than a value resulting from the following calculation $\frac{P_{T\_MS} \cdot PL_1}{I_{BS_1}}$.

The following inequality results:

$$\frac{PL_1}{PL_2} < \left(\frac{Ec}{I0}\right)_{UL} \cdot 10^{\frac{ACIR_{UL}}{10}} \cdot \frac{I_{BS_1}}{x \cdot I_{BS_2}}$$

In logarithmic notation, this gives the following inequality:

$$PL_{1\_dB} - PL_{2\_dB} < \left(\frac{Ec}{I0}\right)_{UL\_dB} + I_{BS_1\_dBm} - I_{BS_2\_dBm} - x_{dB} + ACIR_{UL\_dB} .$$

This inequality represents the condition for which the uplink of the mobile station MS disturbs the next base station BS$_2$ by at least y dB.

In the case where the measurement type chosen is the parameter denoted PL, we then have:

$$\begin{aligned}
Q_{f1\_dB} &= PL_{1\_dB} \\
Q_{f2\_dB} &= PL_{2\_dB} \\
Q_{f1\_dB} - Q_{f2\_dB} &= PL_{1\_dB} - PL_{2\_dB} < \left(\frac{Ec}{I0}\right)_{UL\_dB} + I_{BS_1\_dBm} - I_{BS_2\_dBm} - x_{dB} + ACIR_{UL\_dB} \tag{5} \\
T_{t arg et\_UL\_dB} &= PL_{t arg et\_UL\_dB}
\end{aligned}$$

In the case where the measurement type chosen is the parameter denoted CPICH-RSCP then:

$$Q_{f1\_dB} = CPICH\_RSCP_{1\_dBm} = TX\_CPICH_{BS_1\_dBm} + PL_{1\_dB}$$

$$Q_{f2\_dB} = CPICH\_RSCP_{2\_dBm} = TX\_CPICH_{BS_2\_dBm} + PL_{2\_dB}$$

$$Q_{f1\_dB} - Q_{f2\_dB} = CPICH\_RSCP_{1\_dBm} - CPICH\_RSCP_{2\_dBm}$$

$$< PL_{t arg et\_UL\_dB} + TX\_CPICH_{BS1\_dBm} - TX\_CPICH_{BS2\_dBm} \tag{6}$$

$$PL_{t arg et\_UL\_dB} + TX\_CPICH_{BS1\_dBm} - TX\_CPICH_{BS2\_dBm} = T_{t arg et\_UL\_dB}$$

$$= CPICH\_RSCP_{t arg et\_UL\_dB}$$

In the case where the measurement type chosen is the parameter denoted PCCPCH-RSCP then it suffices to replace the term « CPICH » by the term « PCCPCH » in the above set of inequalities:

$$Q_{f1\_dB} = PCCPCH\_RSCP_{1\_dBm} = TX\_PCCPCH_{BS_1\_dBm} + PL_{1\_dB}$$

$$Q_{f2\_dB} = PCCPCH\_RSCP_{2\_dBm} = TX\_PCCPCH_{BS_2\_dBm} + PL_{2\_dB}$$

$$Q_{f1\_dB} - Q_{f2\_dB} = PCCPCH\_RSCP_{1\_dBm} - PCCPCH\_RSCP_{2\_dBm}$$

$$< PL_{target\_UL\_dB} + TX\_PCCPCH_{BS_1\_dBm} - TX\_PCCPCH_{BS_2\_dBm} \quad (6bis)$$

$$PL_{target\_UL\_dB} + TX\_PCCPCH_{BS1\_dBm} - TX\_PCCPCH_{BS_2\_dBm} = T_{target\_UL\_dB}$$

$$= PCCPCH\_RSCP_{target\_UL\_dB}$$

In the case where the mesaurement type chosen is the parameter denoted CPICH-Ec/No then:

$$Q_{f1\_dB} = CPICH\_Ec/No_{BS_1\_dB} = CPICH\_RSCP_{BS_1\_dBm} - RSSI_{BS_1\_dBm}$$

$$Q_{f2\_dB} = CPICH\_Ec/No_{BS_2\_dB} = CPICH\_RSCP_{BS_2\_dBm} - RSSI_{BS_2\_dBm}$$

$$Q_{f1\_dB} - Q_{f2\_dB} = CPICH\_Ec/No_{BS_1\_dB} - CPICH\_Ec/No_{BS_2\_dB}$$

$$< CPICH\_RSCP_{target\_UL\_dB} - (RSSI_{BS_1\_dBm} - RSSI_{BS_2\_dBm}) \quad (7)$$

$$CPICH\_RSCP_{target\_UL\_dB} - (RSSI_{BS_1\_dBm} - RSSI_{BS_2\_dBm}) = T_{target\_UL\_dB}$$

$$= CPICH\_Ec/No_{target\_UL\_dB}$$

where:

-    $RSSI_{BS_1}$ is a received signal power indicator (or « Received Signal Strength Indicator ») for the signal received by the service base station $BS_1$;
-    $RSSI_{BS_2}$ is a received signal power indicator (or « Received Signal Strength Indicator ») for the signal received by the next base station $BS_2$.

Insofar as the term $ACS_{BS_2}$ may be neglected compared with the term $ACLR_{MS}$, $PL_{target\_UL}$ becomes:

$$PL_{target\_UL\_dB} = \left(\frac{Ec}{I0}\right)_{UL\_dB} + I_{BS_1\_dBm} - I_{BS_2\_dBm} - x_{dB} - ACLR_{MS\_dB} \; ;$$

It may be provided that the first base station $BS_1$ transmits, to the first mobile station MS, a signal comprising a configuration message for configuring this mobile station MS. This message then contains an information element representative of at least one parameter chosen from the following:

-    the service quality objective

$$\left(\frac{Ec}{I0}\right)_{UL}$$

on the uplink from the first mobile station MS;
-    the total interference level $I_{BS_1}$ allowed on the cell served by the first base station;
-    the total interference level $I_{BS_2}$ allowed on the cell served by the second base station;
-    the uplink dead zone reduction parameter x;
-    the rate $ACLR_{MS}$ of rejection on adjacent channels by the second base station in transmission from the first mobile station MS;
-    the rate $ACS_{BS_2}$ of selectivity of the adjacent channels in reception by the second base station $BS_2$; and
-    the first threshold value $T_{target\_UL}$.

Determination of a downlink dead zone criterion on the downlink between the base station $BS_1$ and the mobile station MS

Regarding the downlink between the mobile station MS and the service base station $BS_1$, it is broken when the power level required in order to hold the quality objective

$$\left(\frac{Ec}{Io}\right)_{DL}$$

no longer satisfies the following inequality:

$$\left(\frac{Ec}{Io}\right)_{DL} > \frac{P_{T\_DL} \cdot PL_1}{I_{BS_1 \rightarrow MS} + I_{BS_2 \rightarrow MS}} \quad (8)$$

Given that $I_{BS_2 \rightarrow MS} = P_{T\_BS_2} \cdot PL_2 \cdot 10^{\frac{ACIR_{DL}}{10}}$ and that $I_{BS_1 \rightarrow MS} = N_0 + (2+\beta) \cdot P_{T\_BS_1} \cdot PL_1$, we then have :

$$\left(\frac{Ec}{Io}\right)_{DL} > \frac{P_{T\_DL} \cdot PL_1}{N_0 + (2 + \beta) \cdot P_{T\_BS_1} \cdot PL_1 + P_{T\_BS_2} \cdot 10^{\frac{ACIR_{DL}}{10}}}$$

where $N_0$ is the background noise level,
and $\beta$ is the orthogonality factor of the downlink.
We then obtain:

$$\left(\frac{Ec}{Io}\right)_{DL} > \frac{P_{T\_DL} \cdot PL_1}{N_0 + (2 + \beta) \cdot P_{T\_BS_1} \cdot PL_1 + P_{T\_BS_2} \cdot 10^{\frac{ACIR_{DL}}{10}}}$$

hence

$$\frac{PL_1}{PL_2} < \left(\frac{EC}{Io}\right)_{DL} \frac{\frac{N_0}{PL_2} + (2 + \beta) \cdot P_{T\_BS_1} \cdot \frac{PL_1}{PL_2} + P_{T\_BS_2} \cdot 10^{\frac{ACIR_{DL}}{10}}}{P_{T\_DL}}$$

hence $\dfrac{PL_1}{PL_2}\left(1 - \dfrac{(2+\beta) \cdot P_{T\_BS_1}}{P_{T\_DL}} \cdot \left(\dfrac{Ec}{Io}\right)_{DL}\right) < \left(\dfrac{Ec}{Io}\right)_{DL} \dfrac{\dfrac{N_0}{PL_2} + P_{T\_BS_2} \cdot 10^{\frac{ACIR_{DL}}{10}}}{P_{T\_DL}}$

hence $\dfrac{PL_1}{PL_2} < \left(\dfrac{Ec}{Io}\right)_{DL} \cdot \dfrac{\dfrac{N_0}{PL_2} + P_{T\_BS_2} \cdot 10^{\frac{ACIR_{DL}}{10}}}{P_{T\_DL} \cdot \left(1 - \dfrac{(2+\beta) \cdot P_{T\_BS_1}}{P_{T\_DL}} \cdot \left(\dfrac{Ec}{Io}\right)_{DL}\right)}$

By neglecting the term $\dfrac{N_0}{PL_2}$ with respect to the term

**20**

$$P_{T\_BS2} \cdot 10^{\frac{ACIR_{DL}}{10}} ,$$

we obtain in logarithmic notation:

$$PL_{1\_dB} - PL_{2\_dB} < \left(\frac{Ec}{I0}\right)_{DL\_dB} + P_{T\_BS_2\_dBm} - P_{T\_DL\_dBm} + ACIR_{DL\_dB} - z_{dB}$$

with $z_{\_dB} = 10 \log_{10}(z)$ and $z = 1 - \dfrac{(2+\beta) \cdot P_{T\_BS_1}}{P_{T\_DL}}$.

$$\left(\frac{Ec}{Io}\right)_{DL}$$

.

The above inequality represents the limit condition at which the downlink must be broken due to the proximity of the next base station $BS_2$.

In the case where the measurement type chosen is the parameter PL, we then have:

$$\begin{aligned}
Q_{f1\_dB} &= PL_{1\_dB} \\
Q_{f2\_dB} &= PL_{2\_dB} \\
Q_{f1\_dB} - Q_{f2\_dB} &= PL_{1\_dB} - PL_{2\_dB} \\
&< \left(\frac{Ec}{I0}\right)_{DL\_dB} + P_{T\_BS_2\_dBm} - P_{T\_DL\_dBm} + ACIR_{DL\_dB} - z_{dB} \quad (9) \\
\left(\frac{Ec}{I0}\right)_{DL\_dB} &+ P_{T\_BS_2\_dBm} - P_{T\_DL\_dBm} + ACIR_{DL\_dB} - z_{dB} = T_{t\arg et\_DL\_dB} = PL_{t\arg et\_DL\_dB}
\end{aligned}$$

In the case where the measurement type chosen is the parameter CPICH-RSCP, we then have:

$$Q_{f1\_dB} = CPICH\_RSCP_{1\_dBm} = TX\_CPICH_{BS_1\_dBm} + PL_{1\_dB}$$

$$Q_{f2\_dB} = CPICH\_RSCP_{2\_dBm} = TX\_CPICH_{BS_2\_dBm} + PL_{2\_dB}$$

$$Q_{f1\_dB} - Q_{f2\_dB} = CPICH\_RSCP_{1\_dBm} - CPICH\_RSCP_{2\_dBm}$$

$$< PL_{t\arg et\_DL\_dB} + TX\_CPICH_{BS_1\_dBm} - TX\_CPICH_{BS_2\_dBm} \quad (10)$$

$$PL_{t\arg et\_DL\_dB} + TX\_CPICH_{BS1\_dBm} - TX\_CPICH_{BS_2\_dBm} = T_{t\arg et\_DL\_dB}$$

$$= CPICH\_RSCP_{t\arg et\_DL\_dB}$$

In the case where the measurement type chosen is the parameter PCCPCH-RSCP, it then suffices to replace « CPICH » by « PCCPCH » in the above set of inequalities.

$$Q_{f1\_dB} = PCCPCH\_RSCP_{1\_dBm} = TX\_PCCPCH_{BS_1\_dBm} + PL_{1\_dB}$$

$$Q_{f2\_dB} = PCCPCH\_RSCP_{2\_dBm} = TX\_PCCPCH_{BS_2\_dBm} + PL_{2\_dB}$$

$$Q_{f1\_dB} - Q_{f2\_dB} = PCCPCH\_RSCP_{1\_dBm} - PCCPCH\_RSCP_{2\_dBm}$$

$$< PL_{t\arg et\_DL\_dB} + TX\_PCCPCH_{BS_1\_dBm} - TX\_PCCPCH_{BS_2\_dBm} \quad (10bis)$$

$$PL_{t\arg et\_DL\_dB} + TX\_PCCPCH_{BS1\_dBm} - TX\_PCCPCH_{BS_2\_dBm} = T_{t\arg et\_DL\_dB}$$

$$= PCCPCH\_RSCP_{t\arg et\_DL\_dB}$$

In the case where the measurement type chosen is the parameter CPICH-Ec/No, we then have:

$$Q_{f1\_dB} = CPICH\_Ec/No_{BS_1\_dB} = CPICH\_RSCP_{BS_1\_dBm} - RSSI_{BS_1\_dBm}$$

$$Q_{f2\_dB} = CPICH\_Ec/No_{BS_2\_dB} = CPICH\_RSCP_{BS_2\_dBm} - RSSI_{BS_2\_dBm}$$

$$Q_{f1\_dB} - Q_{f2\_dB} = CPICH\_Ec/No_{BS_1\_dB} - CPICH\_Ec/No_{BS_2\_dB}$$

$$< CPICH\_RSCP_{target\_DL\_dB} - (RSSI_{BS_1\_dBm} - RSSI_{BS_2\_dBm})(11)$$

$$CPICH\_RSCP_{target\_DL\_dB} - (RSSI_{BS_1\_dBm} - RSSI_{BS_2\_dBm}) = T_{target\_DL\_dB}$$

$$= CPICH\_Ec/No_{target\_DL\_dB}$$

In the case where the term ACLR$_{BS_2}$ can be neglected compared with the term ACS$_{MS}$, PL$_{target\_DL}$ becomes:

$$PL_{target\_DL\_dB} = \left(\frac{Ec}{I0}\right)_{DL\_dB} + P_{T\_BS_2\_dBm} - P_{T\_DL\_dBm} - ACS_{MS\_dB} - z_{dB}.$$

It may also be provided that the first base station BS$_1$ transmits, to the first mobile station MS, a signal comprising a configuration message for configuring this mobile station MS. Such a message then contains an information element representative of at least one parameter chosen from the following:

- the service quality objective

$$\left(\frac{Ec}{I0}\right)_{DL}$$

on the downlink to the first mobile station;
- the total power level P$_{T\_BS_2}$ transmitted on the cell served by the second base station BS$_2$;
- the maximum level P$_{T\_DL}$ of transmit power, by the first base station BS$_1$, allowed on the downlink between the first mobile station MS and the first base station BS$_1$;
- the downlink dead zone reduction parameter z;
- the rate ACS$_{MS}$ of selectivity of the adjacent channels in reception by the first mobile station MS;
- the rate ACLR$_{BS_2}$ of rejection on adjacent channels in transmission from the second base station BS$_2$;
- the second threshold value T$_{target\_DL}$.

According to an interesting characteristic of the invention, it is proposed that a radio link failure procedure be triggered as soon as the inequality (inequalities) referenced (5) and/or (9), (6) and/or (10), (6bis) and/or (10bis), or (7) and/or (11) is (are) satisfied in the case where the measurement type chosen is the parameter PL, the parameter CPICH-RSCP, the parameter PCCPCH-RSCP, the parameter CPICH-Ec/No respectively. Such a radio link failure procedure is carried out by the first mobile station MS.

The four pairs of two criteria defined above and represented by inequalities (5) and (9), (6) and (10), (6bis) and (10bis), or (7) and (11) depending on whether the measurement type chosen is the parameter PL, CPICH-RSCP, PCCPCH-RSCP, or CPICH-EC/No respectively, all pertain to the quantity expressed by Q$_{f1\_dB}$-Q$_{f2\_dB}$, hereinafter called the geometry factor. The two inequalities are of the type:

$$Q_{f1\_dB} - Q_{f2\_dB} < T_{target\_dB} \tag{12.0}$$

where:
T$_{target\_dB}$ takes the following values:

| Measurement type chosen | Uplink dead zone | Downlink dead zone |
|---|---|---|
| PL | $PL_{target\_UL\_dB}$ | $PL_{target\_DL\_dB}$ |
| CPICH-RSCP | $CPICH\text{-}RSCP_{target\_UL\_dB}$ | $CPICH\text{-}RSCP_{target\_DL\_dB}$ |
| PCCPCH-RSCP | $PCCPCH\text{-}RSCP_{target\_UL\_dB}$ | $PCCPCH\text{-}RSCP_{target\_DL\_dB}$ |
| CPICH-EC/No | $CPICH\text{-}Ec/NO_{target\_UL\_dB}$ | $CPICH\text{-}EC/NO_{target\_DL\_dB}$ |

This latter inequality (12.0) is equivalent, in particular, to the following system of inequalities:

$$Q_{f1\_dB} < T_{1\_targ\,et\_dB} - H_{1\_dB} \qquad (12.1)$$

$$Q_{f2\_dB} > T_{2\_targ\,et\_dB} + H_{2\_dB} \qquad (12.2)$$

$$T_{1\_targ\,et\_dB} - T_{2\_targ\,et\_dB} = T_{targ\,et\_dB} \qquad (12.3)$$

with $H_{1\_dB} = 0$ and $H_{2\_dB} = 0$; the parameters $H_1$ and $H_2$ are « hysteresis » parameters relating to the service base station $BS_1$ and the next base station $BS_2$ respectively so as not to inadvertently trigger one or more corresponding events. According to a variant embodiment, we have: $H_{1\_dB} \neq 0$ and $H_{2\_dB} \neq 0$. In this Case, $T_{target\_dB}$ becomes $T'_{target\_dB} = T_{target\_dB} - H_{1\_dB} - H_{2\_dB}$, without the senses of the inequalities (5) to (11) being changed. Specifically, $-H_{1\_dB} - H_{2\_dB}$ is, in this case, an additional « triggering margin » for the triggering of the corresponding event or events.

The equations (12.1) and (12.2) thus correspond to the respective steps of comparing the first and second parameters with the first and second partial threshold values. The radio link is in particular interrupted when $Q_{f1\_dB} < T1_{\_target\_DL\_dB}$ and when $Q_{f2\_dB} > T2_{\_target\_DL\_dB}$, and/or when $Q_{f1\_dB} < T1_{\_target\_UL\_dB}$ and when $Q_{f2\_dB} > T2_{\_target\_UL\_dB}$.

To carry out such comparison steps, the first base station transmits, beforehand, to the mobile station MS, a configuration message for configuring the mobile station MS. Such a message contains an information element representative of an event relating to the interruption of the radio link between the mobile station MS and the base station $BS_1$. Such an event (such events) may in particular belong to the following group of events: 1e, 1f, 2a, 2b, 2c and 2d.

It is clear that the inequality (12.0) relating to the geometry factor may be expressed according to multiple equivalent inequalities.

The unit of measurement of $T_{1\_target}$ and $T_{2\_target}$ is that of the measurement type chosen.

The inequalities 12.1 and 12.2 can be evaluated in the mobile station MS by activating actions, commonly called events, defined in recommendation RRC 3GPP TS 25.331, section 14.2 of the UMTS FDD 3GPP standard.

It is for example possible to use an event of type 2b. This event verifies that: "the estimated quality of the frequency currently being used, denoted $Q_{used}$, is below a certain threshold $T_{used}$ and the estimated quality of an unused frequency, denoted $Q_{un\_used}$, is above a certain threshold $T_{un\_used}$". This event makes it possible to satisfy inequalities 12.1 and 12.2 by taking $Q_{f1}$, $Q_{f2}$, $T_{1\_target}$ and $T_{2\_target}$ according to the following table:

| Measurement type chosen | | Uplink dead zone | Downlink dead zone |
|---|---|---|---|
| PL | $Q_{f1} = Q_{used}$ | $PL_{BS_1\_dB}$ | $PL_{BS_1\_dB}$ |
| | $T_{1\_target} = T_{used}$ | $PL_{1\_target\_UL\_dB}$ | $PL_{1\_target\_DL\_dB}$ |
| | $Q_{f2} = Q_{non\_used}$ | $PL_{BS_2\_dB}$ | $PL_{BS_2\_dB}$ |
| | $T_{2\_target} = T_{non\_used}$ | $PL_{2\_target\_UL\_dB}$ | $PL_{2\_target\_DL\_dB}$ |
| CPICH-RSCP | $Q_{f1} = Q_{used}$ | $CPICH\text{-}RSCP_{BS_1\_dB}$ | $CPICH\text{-}RSCP_{BS_1\_dB}$ |
| | $T_{1\_target} = T_{used}$ | $CPICH\text{-}RSCP_{1\_target\_UL\_dB}$ | $CPICH\text{-}RSCP_{1\_target\_DL\_dB}$ |
| | $Q_{f2} = Q_{non\_used}$ | $CPICH\text{-}RSCP_{BS_2\_dB}$ | $CPICH\text{-}RSCP_{BS_2\_dB}$ |
| | $T_{2\_target} = T_{non\_used}$ | $CPICH\text{-}RSCP_{2\_target\_UL\_dB}$ | $CPICH\text{-}RSCP_{2\_target\_DL\_dB}$ |

(continued)

| Measurement type chosen | | Uplink dead zone | Downlink dead zone |
|---|---|---|---|
| PCCPCH-RSCP | $Q_{f1} = Q_{used}$ | PCCPCH-RSCP$_{BS_1\_dB}$ | PCCPCH-RSCP$_{BS_1\_dB}$ |
| | $T_{1\_target} = T_{used}$ | PCCPCH-RSCP$_{1\_target\_UL\_dB}$ | PCCPCH-RSCP$_{1\_target\_DL\_dB}$ |
| | $Q_{f2} = Q_{non\_used}$ | PCCPCH-RSCP$_{BS_2\_dB}$ | PCCPCH-RSCP$_{BS_2\_dB}$ |
| | $T_{2\_target} = T_{non\_used}$ | PCCPCH-RSCP$_{2\_target\_UL\_dB}$ | PCCPCH-RSCP$_{2\_target\_DL\_dB}$ |
| CPICH-EC/No | $Q_{f1} = Q_{used}$ | CPICH-EC/NO$_{BS_1\_dB}$ | CPICH-EC/NO$_{BS_1\_dB}$ |
| | $T1\_target = T_{used}$ | CPICH-EC/NO$_{1\_target\_UL\_dB}$ | CPICH-EC/NO$_{1\_target\_DL\_dB}$ |
| | $Q_{f2} = Q_{non\_used}$ | CPICH-EC/NO$_{BS_2\_dB}$ | CPICH-EC/NO$_{BS_2\_dB}$ |
| | $T_{2\_target} = T_{non\_used}$ | CPICH-EC/NO$_{2\_target\_UL\_dB}$ | CPICH-EC/NO$_{2\_target\_DL\_dB}$ |

When inequalities 12.1 and 12.2 are satisfied, the event of type 2b detects same.

The magnitudes $Q_{f1}$ and $Q_{f2}$ are measured by the mobile station MS. The magnitude $Q_{f2}$ can in particular be measured following the implementation of a compressed mode within the mobile station MS.

Moreover, the parameters making up the magnitudes $T_{1\_target}$ and $T_{2\_target}$ are either defined beforehand during network planning, or all or some of them are measured in real time by the UTRAN network of the base station $BS_1$ so as to satisfy equation 12.3 and are supplied to the mobile station MS by the network.

According to a variant embodiment, the evaluation of the inequalities 12.1 and 12.2 can be carried out by means of two distinct events, an event of type 2c and an event of type 2d. The event 2c checks that "the estimated quality of the non-used frequency $Q_{non\_used}$ is above the threshold $T_{non\_used}$" and the event 2d checks that "the estimated quality of the frequency currently being used $Q_{used}$ is below the threshold $T_{used}$". The evaluation of these two events is equivalent to that of the event 2b.

Implementation of the method of the invention in the UTRAN network of the base station $BS_1$ and in the mobile station MS when said measurement type chosen is the parameter PL

Within the framework of the present invention, the two respective fixed networks of the two operators are assumed, in the most unfavourable situation, not to be harmonised and hence incapable of exchanging information in real time. The operator 1 runs the first base station $BS_1$ with which the mobile station MS is in service. Thanks to this service link, the operator 1 has access to the parameters peculiar to the mobile station MS. The operator 2 operates the next base station $BS_2$ that is the victim of the uplink dead zone and knows the parameters peculiar thereto. Since the events are composed of parameters peculiar to the service base station $BS_1$, the next base station $BS_2$ and to the mobile station MS, it is necessary for the operator 2 to communicate to the operator 1 the parameters peculiar to the next base station $BS_2$ that cannot be measured by the mobile station MS, so that the operator 1 configures the radio events in the mobile station MS. Thus, the parameters peculiar to the next base station $BS_2$ that cannot be measured by the mobile station MS cannot be known in real time to the operator 1. These parameters are therefore assumed to be static, or failing this to vary within ranges which are known a priori.

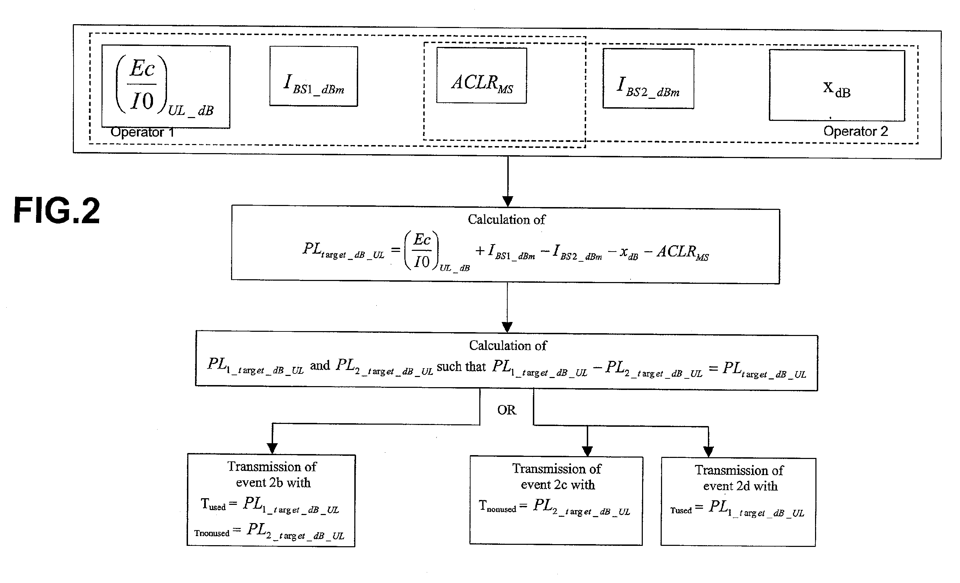

If the mobile station MS has to supervise the criterion pertaining to the uplink, when the measurement type chosen is the parameter PL, it is necessary firstly for the fixed networks of the operators to carry out the steps of figure 2, namely:

a) the operator 2 determines the range of possible values of $I_{BS2}$, i.e. [$I_{BS2\_min}$, $I_{BS2\_max}$] with $I_{BS2\_min} < I_{BS2\_max}$ and communicates it to the operator 1. Moreover, the operator 2 communicates to the operator 1 the parameter $ACS_{BS2}$. The value of the parameter $ACS_{BS2}$ can, for example, be equal, in the worst case from the point of view of the uplink dead zone, either to 43 dB, such as specified in the 3GPP TS 25.104 standard, or else a better (that is to say higher) value if the operator is equipped with a higher-performance base station. By default, this value is assumed to be equal to 43 dB as specified in 3GPP recommendation TS 25.104. The two operators agree on the value x acceptable for the uplink dead zone effect. The operator 1 can in real time measure $I_{BS1}$ which is none other than the value of the parameter RSSI of the wideband signal received on the frequency $f_{1-UL}$ of the uplink, as defined in the 3GPP TS 25.215 standard, measured by the first base station $BS_1$. Moreover, the operator 1 that maintains the service in progress with the first mobile station MS, knows the quality objective of this service and can deduce

$$\left(\frac{Ec}{I0}\right)_{UL}$$

therefrom.

b) The operator 1 assumes, by default, that the parameter $ACLR_{MS}$ has the worst value for the uplink dead coverage zone, i.e. 33 dB, as specified in the 3GPP TS 25.101 standard.

According to an improved embodiment, the parameter $ACLR_{MS}$ is specific to the first mobile station MS and is assumed to be stored in its memory. This specific parameter will subsequently be denoted $ACLR_{MS\_spec}$. This parameter may form the subject, for example of a measurement during factory adjustment of the mobile station or equal to a value guaranteed by construction. The mobile station MS signals this parameter $ACLR_{MS\_spec}$ to its UTRAN operator network. Such an embodiment enables the UTRAN network to benefit from better performance of the first mobile station in terms of value of the parameter $ACLR_{MS}$. Indeed, in this case, if the value of this parameter $ACLR_{MS\_spec}$ is better, the value of the parameter ACIR ($ACIR\_dB < 0$) will be smaller, the threshold value $T_{target}$ ($T_{target\_dB} < 0$) will be smaller and the event(s) will be triggered later when the mobile station approaches the next base station $BS_2$, this having the effect of maintaining the service for longer in respect of the first mobile station MS.

The UTRAN operator network then calculates the parameter $ACIR_{UL}$ in accordance with the parameters $ACLR_{MS\_spec}$ transmitted by the mobile station MS and the $ACS_{BS_2}$ as defined previously, according to the following formula:

$$ACIR_{\_UL\_dB} = 10 \cdot \log_{10}(10^{\frac{-ACLR_{MS\_spec\_dB}}{10}} + 10^{\frac{-ACS_{BS1\_dB}}{10}}) < 0;$$

The UTRAN network of the operator of the mobile station MS calculates, in real time, the threshold value $T_{target}$ of the uplink, hereinafter denoted $T_{target\_UL}$, such that

$$\left(\frac{Ec}{I0}\right)_{UL\_dB} + I_{BS_1\_dBm} - I_{BS_2\_dBm\_max} - x_{dB} + ACIR_{UL\_dB} = T_{target\_UL\_dB} \ ;$$

for a small threshold value, such as for example -70 dB, that is to say one which is very sensitive so as to considerably reduce the dead zone effect; or:

$$\left(\frac{Ec}{I0}\right)_{UL\_dB} + I_{BS_1\_dBm} - I_{BS_2\_dBm\_min} - x_{dB} + ACIR_{UL\_dB} = T_{target\_UL\_dB}$$

for a large threshold value, such as for example -50 dB, that is to say one which is very insensitive so as to moderately reduce the dead zone effect.

c) The UTRAN network of the operator of the mobile station MS determines partial threshold values $T_{1\_target\_UL}$ and $T_{2\_target\_UL}$ such that $T_{1\_target\_UL\_dB} - T_{2\_target\_UL\_dB} = T_{target\_UL\_dB}$, which is an equation similar to (12.3); the distribution of $T_{target\_UL}$ between $T_{1\_target\_UL}$ and $T_{2\_target\_UL}$ according to this equation may be carried out according to either of the following equivalent criteria:

- distance of the first mobile station from the first base station. If the desired distance according to the radio network planning is large (resp. small) then the first partial threshold value $T_{1\_target\_UL\_dB} < 0$ is chosen to be small (resp. large), such as for example -95 dBm (resp. -75 dBm). The second partial threshold value $T_{2\_target\_UL}$ is deduced according to equation 12.3.
- approaching of the first mobile station MS to the second base station $BS_2$. If this desired approaching according to the radio network planning is small (resp. large) then the second partial threshold value $T_{2\_target\_UL}$ is chosen to be small (resp. large), as for example -95 dBm (resp. -75 dBm). The first partial threshold value $T_{1\_target\_UL}$ is deduced according to equation 12.3.

d) The UTRAN network of the operator 1 of the mobile station MS transmits, in the form of one or more messages, the event of type 2b or the events of type 2c and of type 2d as well as the partial threshold values $T_{1\_target\_UL}$ and $T_{2\_target\_UL}$ to the mobile station MS.

Finally, the hysteresis values are defined so as to best filter the inadvertent triggerings of events. Typically, they are equal to the measurement error induced in the calculation of the threshold value $T_{target}$, i.e. 10 dB. Furthermore, they may also correspond to the fast variations of the magnitudes $Q_{f1}$ and $Q_{f2}$, due for example to the power attenuation losses due to the propagation of the short-term signals due to close multipath reflections.

According to an improved embodiment, steps b), c) and d) are replaced by steps b'), c') and d') which follow. Such an embodiment also enables the UTRAN network to benefit from better performance of the first mobile station in terms of $ACLR_{MS}$.

b' ) The specific parameter $ACLR_{MS\_spec}$ is assumed to be stored in the memory of the first mobile station MS. This parameter may have formed the subject, for example of a measurement during a factory adjustment of the mobile station or equal to a value guaranteed by construction. The UTRAN network of the operator of the mobile station MS calculates, in real time, the uplink intermediate threshold value $T_{intermediary}$, hereinafter denoted $T_{intermediary\_UL}$, such that

$$\left(\frac{Ec}{I0}\right)_{UL\_dB} + I_{BS_1\_dBm} - I_{BS_2\_dBm\_max} - x_{dB} = T_{intermediary\_UL\_dB}$$

for a small threshold value, such as for example -30 dB, that is to say one which is very sensitive so as to considerably reduce the dead zone effect; or else:

$$\left(\frac{Ec}{I0}\right)_{UL\_dB} + I_{BS_1\_dBm} - I_{BS_2\_dBm\_min} - x_{dB} = T_{intermediary\_UL\_dB}$$

for a large threshold value, such as for example -10 dB, that is to say one which is very insensitive so as to moderately reduce the dead zone effect.

The UTRAN network of the operator of the mobile station MS signals the parameters $T_{intermediary\_UL}$ and $ACS_{BS2}$ to the mobile station MS, the latter parameter being by default, that is to say in the event of nonprovision by the operator 2, assumed by the mobile station MS to be equal to 43 dB. The UTRAN network of the operator of the mobile station MS also signals a maximum acceptable value $T_{1\_target\_UL\_max}$ of the parameter $T_{1\_target\_UL}$ to the mobile station MS. This value is chosen in a similar manner to step c) above.

c') The mobile station MS determines the value $ACIR_{UL}$ according to the equation as defined previously from the parameters $ACLR_{MS\_spec}$ and $ACS_{BS2}$. The mobile station MS then calculates $T_{target\_UL}$ as follows:

$$T_{target\_UL\_dB} = T_{intermediary\_UL\_dB} + ACIR_{UL\_dB}.$$

d' ) The mobile station MS deduces $T_{1\_target\_UL}$ and $T_{2\_target\_UL}$ such that $T_{1\_target\_UL\_dB} - T_{2\_target\_UL\_dB} = T_{target\_UL\_dB}$, which is an equation similar to (12.3); the distribution of $T_{target\_UL}$ between $T_{1\_target\_UL}$ and $T_{2\_target\_UL}$ according to this equation can be carried out by the mobile station according to the following equations:

$$T_{1\_target\_UL\_dB} = T_{1\_traget\_UL\_max\_dB},$$

*and*

$$T_{2\_target\_UL\_dB} = T_{target\_UL\_dB} - T_{1\_target\_UL\_dB}$$

$T_{1\_target\_UL\_max}$ being defined as a first maximum partial threshold value of the first threshold value $T_{1\_target\_UL}$.

The embodiment presented above may be effected if the measurement type chosen is the parameter CPICH-RSCP. In this case, the operator 2 communicates to the operator 1 the range of variations of $TX\_CPICH_{BS2}$, that is to say $[TX\_CPICH_{BS2\_min}, TX\_CPICH_{BS2\_max}]$. The operator 1 measures in real time $TX\_CPICH_{BS1}$, which is

none other than the power of the code CPICH transmitted, as defined in 3GPP recommendation TS 25.215.

Thus, the operator 1 can calculate according to:

$$T_{target\_UL\_dB} = CPICH\_RSCP_{target\_UL\_dB}$$

$$= PL_{target\_UL\_dB} + TX\_CPICH_{BS_1\_dBm} - TX\_CPICH_{BS_2\_dBm\_max}$$

if he wants a sensitive threshold,

or else according to:

$$T_{target\_UL\_dB} = CPICH\_RSCP_{target\_UL\_dB}$$

$$= PL_{target\_UL\_dB} + TX\_CPICH_{BS_1\_dBm} - TX\_CPICH_{BS_2\_dBm\_min}$$

if he wants a moderate threshold,

and can distribute $CPICH\_RSCP_{target\_UL}$ between $CPICH\_RSCP_{1\_target\_UL}$ and $CPICH\_RSCP_{2\_target\_UL}$ as before.

Likewise, the embodiment described above can be effected if the measurement type chosen is the parameter PCCPCH-RSCP. In this case, it suffices to replace the term « CPICH » by the term « PCCPCH » in the case above where the parameter CPICH-RSCP is the measurement type chosen.

Likewise, the embodiment explained above can be effected if the measurement type chosen is the parameter CPICH-Ec/No. The operator 2 communicates to the operator 1 the range of variations of $RSSI_{BS_2}$, that is to say $[RSSI_{BS_2\_min}, RSSI_{BS_2\_max}]$. The operator 1 measures in real time $RSSI_{BS_1}$, which is none other than the total power received by the first base station, as defined in 3GPP recommendation TS 25.215.

Thus, the operator 1 can calculate according to:

$$T_{target\_UL\_dB} = CPICH\_Ec/No_{target\_UL\_dB}$$

$$= CPICH\_RSCP_{target\_UL\_dB} - (RSSI_{BS_1\_dBm\_max})$$

if he wants a sensitive threshold,

or else according to :

$$T_{target\_UL\_dB} = CPICH\_Ec/No_{target\_UL\_dB}$$

$$= CPICH\_RSCP_{target\_UL\_dB} - (RSSI_{BS_1\_dBm} - RSSI_{BS_2\_dBm\_min})$$

if he wants a moderate threshold,

and can distribute $CPICH\text{-}Ec/No_{target\_UL}$ between $CPICH\text{-}Ec/No_{1\_target\_UL}$ and $CPICH\text{-}Ec/No_{2\_target\_UL}$ as before.

Steps b'), c'), d') are also applicable to these three measurement types mentioned above.

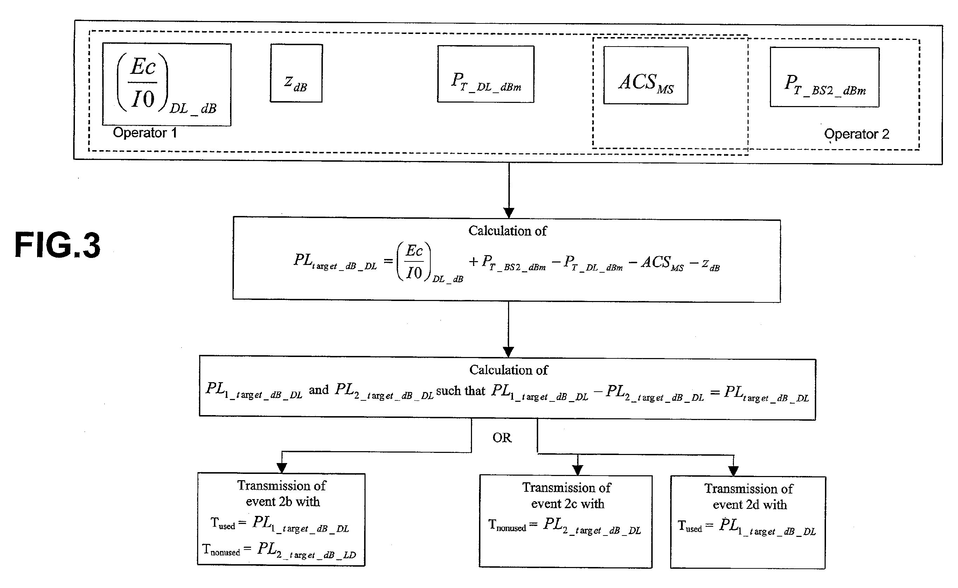

Likewise, if the mobile station MS has to supervise the criterion pertaining to the downlink, then the measurement type chosen is the parameter PL, it is firstly necessary for the fixed networks of the operators to carry out the steps of figure 3, namely:

a) the operator 2 determines the range of possible Values of $P_{T\_BS2}$ i.e. $[P_{T\_BS2\_min}, P_{T\_BS2\_max}]$ with $P_{T\_BS2\_min} < P_{T\_BS2\_max}$ and communicates it to the operator 1. The operator 1 uses, if the parameter $ACLR_{BS2}$ is not a priori known through the intermediary of the operator, the worst value of the parameter $ACLR_{BS2}$, i.e. for example 43 dB, as specified in the 3GPP TS 25.104 standard. Moreover, the operator 1 maintains the service in progress for the first mobile station MS, knows the quality objective of this service and can deduce

$$\left(\frac{Ec}{I0}\right)_{DL}$$

therefrom as well as $P_{T\_DL}$ which is none other than the maximum power allowed from the first base station BS$_1$ to the mobile station MS for the relevant service. Finally, the parameter z can be calculated in real time on the basis of the following measurement:

- $P_{T\_BS_1}$, which is none other than the total wideband power transmitted by the service base station BS$_1$, according to recommendation 3GPP TS25.215,

and of the following assumptions:

- $\beta=1$, worst case for the dead zone effect, in addition to the previously determined parameters

$$\left(\frac{Ec}{I0}\right)_{DL},$$

$P_{T\_DL}$ coming into the equation:

$$z = \frac{1 - (2 + \beta)\cdot P_{T\_BS_1}}{P_{T\_DL}}\cdot\left(\frac{Ec}{Io}\right)_{DL}.$$

b) The operator 1 assumes by default also a priori the worst value for the downlink dead zone effect ACS$_{MS}$, i.e. 33 dB as defined in recommendation 3GPP TS 25.101.

In practice, the value of the parameter ACS$_{MS}$ is much better than 33 dB, the consequence of this being to render the downlink(s) more robust when it is affected by the downlink dead zone. Assuming this value of 33 dB, referred to as a least favourable from the point of view of the downlink dead zone effect, the UTRAN network increases the triggering threshold, this having the « intrinsic » effect of accentuating the downlink dead zone effect.

According to an alternative embodiment, the parameter ACS$_{MS}$ is specific to the first mobile station and is assumed to be stored in its memory. This specific parameter will be denoted ACS$_{MS\_spec}$ in the remainder of the description. This parameter may have formed the subject, for example, of a measurement during factory adjustment of the mobile station or equal to a value guaranteed by construction. The mobile station MS signals this specific parameter ACS$_{MS\_spec}$ to its UTRAN operator network. Such an alternative allows the « actual » triggering threshold for the downlink dead zone to be defined better by taking into account the « actual » value of ACS$_{MS}$. Indeed, by taking the default value of 33 dB, the network is at risk of triggering the downlink dead zone effect in too sensitive a manner.

The UTRAN operator network calculates the parameter ACIR$_{DL}$ in accordance with the parameters ACS$_{MS\_spec}$ and ACLR$_{BS_2}$ as defined previously, according to the following formula:

$$ACIR_{DL\_dB} = 10\cdot\log_{10}(10^{\frac{-ACLR_{BS2\_dB}}{10}} + 10^{\frac{-ACS_{MS\_spec-dB}}{10}}) < 0.$$

The UTRAN network of the operator of the mobile station MS calculates the downlink threshold value $T_{target}$, hereinafter denoted $T_{target\_DL}$, such that:

$$T_{target\_DL\_dB} = \left(\frac{Ec}{I0}\right)_{DL\_dB} + P_{T\_BS_2-dBm\_min} - P_{T\_DL\_dBm} + ACIR_{DL\_dB} - z_{dB} ;$$

if he wants a sensitive threshold,
or else according to:

$$T_{target\_DL\_dB} = \frac{Ec}{I0}_{DL\_dB} + P_{T\_BS_2-dBm\_max} - P_{T\_DL\_dBm} + ACIR_{DL\_dB} - z_{dB} ;$$

if he wants a moderate threshold.

c) The UTRAN network of the operator of the mobile station MS determines partial threshold values $T_{1\_target\_DL}$

and $T_{2\_target\_DL}$ such that $T_{1\_target\_DL\_dB} - T_{2\_target\_DL\_dB} = T_{target\_DL\_dB}$ ; the balance between $T_{1\_target\_DL}$ and $T_{2\_target\_DL}$ forms the subject of the same compromise and of calculation rules similar to those detailed over the case of the uplink dead zone using partial threshold values. Use is made in particular of the following equations:

$$T_{1\_target\_DL\_dB} = T_{1\_target\_DL\_max\_dB},$$

and

$$T_{2\_target\_DL\_dB} = T_{target\_DL\_dB} - T_{1\_target\_DL\_dB}$$

$T_{1\_target\_DL\_max}$ being defined as a maximum partial threshold value $T_{1\_target\_DL}$ , relating to the downlink dead zone of the first base station. The threshold value $T_{target\_DL}$ relating to the downlink is also made available to the first mobile station by any appropriate means in a general manner.

d) The UTRAN network of the operator of the mobile station MS transmits, in the form of one or more messages, the event of type 2b or the events of type 2c and of type 2d, as well as the partial threshold values $T_{1\_target\_DL}$ and $T_{2\_target\_DL}$ to the mobile station MS.

Finally, the hysteresis $H_1$ and $H_2$ relating to the service base station $BS_1$ and to the next base station $BS_2$ are defined in the same manner as for the case of the uplink dead zone.

According to an alternative embodiment, steps b), c) and d) are replaced by steps b'), c') and d') which follow. Such an alternative allows better definition of the « actual » triggering threshold for the downlink dead zone by taking into account the specific value of $ACS_{MS}$, that is to say $ACS_{MS\_spec}$.

b' ) The parameter $ACS_{MS\_spec}$ is assumed to be stored in the memory of the first mobile station MS. This parameter may have formed the subject, for example of a measurement during factory adjustment of the mobile station or equal to a value guaranteed by construction. The UTRAN network of the operator of the mobile station MS calculates, in real time, the downlink intermediate threshold value $T_{intermediary}$ , hereinafter denoted $T_{intermediary\_DL}$ , such that:

$$\left(\frac{Ec}{I0}\right)_{DL\_DB} + P_{T\_BS_2\_dBm\_min} - P_{T\_DL\_dBm} - Z_{dB} = T_{intermediary\_DL\_dB}$$

for a small threshold value, such as for example -10 dB, that is to say one which is very sensitive so as to considerably reduce the dead zone effect;
or else:

$$\left(\frac{Ec}{I0}\right)_{DL\_dB} + P_{T\_BS_2\_dBm\_max} - P_{T\_DL\_dBm} - Z_{dB} = T_{intermediary\_DL\_dB}$$

for a threshold value, such as for example -30 dB, that is to say one which is not very sensitive so as to moderately reduce the dead zone effect.

The UTRAN network of the operator of the mobile station MS signals the parameters $T_{intermediary\_DL}$ and $ACLR_{BS_2}$ to the mobile station MS, the latter parameter being by default, that is to say should it not be made available by the operator 2, assumed by the mobile station MS to be equal to 43 dB. The UTRAN network of the operator of the mobile station MS also signals to the mobile station MS, the first maximum partial threshold value $T_{1target\_DL\_max}$ relating to the first partial value $T_{1target\_DL}$. This value is chosen in a similar manner to step c) above.

c') The mobile station MS determines the value $ACIR_{DL}$ according to the equation as defined previously from the parameters $ACS_{MS\_spec}$ and $ACLR_{BS_2}$. The mobile station MS then calculates the threshold value $T_{target\_DL}$ relating to the downlink as follows: $T_{target\_DL\_dB} = T_{1\_target\_DL\_dB} + ACIR_{DL\_dB}$.

d') The mobile station MS deduces therefrom the partial threshold values $T_{1\_target\_DL}$ and $T_{2\_target\_DL}$ relating to the downlink such that $T_{1\_target\_DL\_dB} - T_{2\_target\_DL\_dB} = T_{target\_DL\_dB}$, which is an equation similar to (12.3); the distribution of the threshold value $T_{target\_UL}$ between $T_{1\_target\_UL}$ and $T_{2\_target\_UL}$ according to this equation can be carried out by the mobile station according to the following equations:

$$T_{1\_target\_DL\_dB} = T_{1\_target\_DL\_max\_dB},$$

and

$$T_{2\_target\_DL\_dB} = T_{target\_DL\_dB} - T_{1\_target\_DL\_dB}$$

Moreover, if the measurement type chosen is the parameter CPICH-RSCP, PCCPCH-RSCP or CPICH-Ec/No, the calculations of the partial threshold values $T_{1target\_DL}$ and $T_{2target\_DL}$ may be performed in a similar manner to the case of the uplink dead zone.

In the two cases of uplink and downlink dead zones, the partial threshold values ($T_{1\_target\_UL}$, $T_{2\_target\_UL}$) of the uplink and ($T_{1\_target\_DL}$, $T_{2\_target\_DL}$) of the downlink can be defined for example in the following manner:

-

$$T_{1\_target\_UL\_dB} = PL_{1max\_dB} \text{ or } T_{1\_target\_DL\_dB} = PL_{1max\_dB},$$

where $PL_{1max}$ is a parameter representative of the maximum allowed power attenuation losses due to the propagation of the signals transmitted on the cell associated with the base station $BS_1$;

-

$$T_{2\_target\_UL\_dB} = T_{target\_UL\_dB} - T_{1\_target\_UL\_dB}$$

or

$$T_{2\_target\_DL\_dB} = T_{target\_DL\_dB} - T_{1\_target\_DL\_dB}.$$

At the level of the mobile station MS, four different mutually exclusive strategies to trigger the radio link failure procedure can be adopted. Thus, the radio link failure procedure is triggered:

- as soon as inequality (5) (resp. (6), (6bis),(7)) is satisfied and inequality (9) (resp. (10), (10bis),(11)) is not satisfied; or
- as soon as inequality (9) (resp. (10), (10bis),(11)) is satisfied and inequality (5) (resp. (6), (6bis),(7)) is not satisfied; or
- as soon as the two inequalities are satisfied; or
- as soon as only one (5) (resp. (6), (6bis),(7)) or the other (9) (resp. (10), (10bis),(11)) of the two inequalities is satisfied.

The method is more or less sensitive to the dead zones depending on whether one or other of these strategies is adopted.

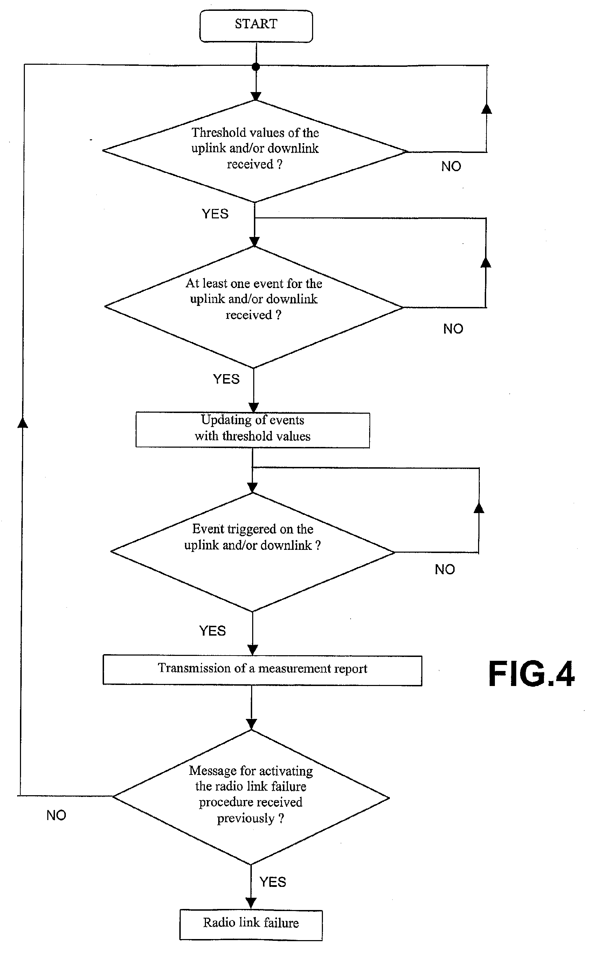

The process for triggering a radio link failure procedure in the mobile station is illustrated by Figure 4:

- the mobile station checks that, according to the strategy adopted, partial threshold values ($T_{1\_target\_UL}$, $T_{2\_target\_UL}$) and/or ($T_{1\_target\_DL}$, $T_{2\_target\_DL}$) required for its implementation have been received (satisfaction of both inequalities or of just one);
- if these partial threshold values have been received, the mobile station checks that an event of type 2b or events of type 2c and 2d have been received for the uplink and/or downlink in accordance with the strategy adopted;
- the event or events received are updated with the partial threshold values ($T_{1\_target\_UL}$, $T_{2\_target\_UL}$) relating to the. uplink and/or ($T_{1\_target\_DL}$, $T_{2\_target\_DL}$) relating to the downlink received;
- if the event or events required for implementing the strategy is or are checked, the mobile station MS despatches a measurement ratio to the base station $BS_1$; this measurement ratio comprises in particular the measurement values $Q_{f1}$ and $Q_{f2}$;
- finally, if a radio link failure procedure activation message conditioned by the triggering of event(s) has been received previously, the mobile station MS then triggers a radio link failure procedure; if the mobile station has not received this message previously, the above steps are repeated.

The effects of the triggering of a radio link failure procedure in the mobile station MS are defined in recommendation RRC 25.331 of the 3GPP/UMTS standard:

- release of the uplink and downlink with the base station $BS_1$; the power transmitted on the uplink by the mobile station MS then becomes zero and the uplink dead zone due to the mobile station MS becomes zero;
- if possible, reselection of another base station having a better service quality ,
- if a new base station is reselected, despatching of a relocation message to it, and reestablishment of the link with the new base station.

If no other base station can be reselected at the moment of the radio link failure procedure, the mobile station repeats the reselection procedure of another base station regularly as long as it has not been possible for any radio link to be set up again.

In an improved embodiment, the events are supplied only to the mobile stations which are liable to be present in a geographical zone to which a potential dead zone relates. For example, if a cell which is not located in proximity to cells of a competing operator, it is not necessary to send the events to the mobile stations which are located in this cell.

Moreover, the radio link failure procedure is activated in the mobile station only if the latter is liable to be in a zone of the cell which could be a dead zone. For example, the radio link failure procedure conditioned by the triggering of event(s) is not activated when the mobile station is very close to its service base station. This triggering of radio event(s) is performed by despatching a dedicated message to the mobile station as indicated previously in Figure 4. Advantageously, this message for activating the radio link failure procedure conditioned by the triggering of event(s) comprises an information element relating to the type of event(s) triggering the radio link failure procedure.

It is in particular possible to choose an event or a combination of events included within the following group:

- an event of type 1e,
- an event of type 1f,
- an event of type 2a,
- an event of type 2b,
- an event of type 2c, and
- an event of type 2d.

The use of the radio link failure procedure on triggering of event (s) with events of type 2b or of types 2c and 2d allows a posteriori elimination of the dead zones due to the mobile station MS. However, this scheme can be regarded as passive, since the dead zone effect has already begun when the radio link failure procedure is triggered.

According to an alternative embodiment, it is proposed that the dead zone effect be anticipated and that any transmission on the uplink be stopped before the dead zone occurs. For this alternative, an event of type 2a is used, corresponding to a "change of best frequency" such as defined in recommendation RRC 25.331, section 14.2, of the UMTS FDD 3GPP standard.

This event is used to detect compliance of the inequality $Q_{non\_best\_dB} \geq Q_{best\_dB} + H_{2a\_dB} / 2$ where $Q_{best}$ is the estimate of quality of a frequency regarded as being the "best frequency", $Q_{non\_best}$ is the estimate of quality of a frequency not regarded as the "best frequency" and $H_{2a}$ is a hysteresis value lying for example between 0 and 14.5 dB.

In the case where the measurement type chosen corresponds to the power attenuation losses due to the propagation of the signals transmitted from a base station, we take $Q_{best\_dB} = PL_{1\_dB}$ and $Q_{non\_best\_dB} = PL_{2\_dB}$ in such a way as to satisfy $PL_{2\_dB} \geq PL_{1\_dB} + H_{2a\_dB} / 2$ , $H_{2a}$ being a very low threshold lying for example between 0 and 14.5 dB. Such an embodiment can be employed as a preventive measure and enables the UTRAN fixed network to forestall any uplink dead zone degradation.

The event of type 2a is applicable when the measurement type chosen is the parameter CPICH-RSCP, PCCPCH-RSCP or CPICH Ec/Io.

According to a variant embodiment, the UTRAN network of the operator 1 does not activate the automatic radio link failure procedure on triggering of event(s). In this case, when the event configured is triggered in the mobile station and then signalled, the fixed UTRAN network has the possibility of releasing the radio link with the mobile station, sending it a message of:

- radio bearer reconfiguration;
- radio bearer release;
- transport channel reconfiguration; or
- physical channel reconfiguration as specified in the 3GPP TS 25.331 standard.

The invention has been described for the "multi-operator inter-frequency" case. Of course, if the service frequencies $f_{1-UL}$ and $f_{2-UL}$ of the uplinks relating to the service base station $BS_1$ and the next base station $BS_2$ are equal ("multi-operator intra-frequency" case), it is possible to choose a zero value for the parameter $ACLR_{MS}$ in the inequalities (5), (6), and (7) and a zero value for the parameter $ACS_{MS}$ in inequalities (9), (10), and (11). Moreover, the events of type 1e and 1f, defined in recommendation 25.331, section 14.1, of the 3GPP standard, can be used instead of events of type 2c and 2d respectively.

**Claims**

1. Method of reducing at least one dead zone relative to a first base station ($BS_1$) and/or at least one second base station ($BS_2$), said at least one second base station being next to said first base station ($BS_1$), said first base station being comprised within a first access network, said second base station being comprised within a second access network, said first and second access networks being separate and independent, **characterized in that**, when a first mobile station (MS), currently communicating on at least one first frequency ($f_{1-UL}$) with said first base station ($BS_1$), approaches said second base station ($BS_2$), at least one other mobile station (MS'), referred to as a second mobile station, communicating with said second base station ($BS_2$) on at least one second frequency ($f_{2-UL}$), said method comprises the following steps of:

   - estimation, by said first mobile station (MS), of at least one first ($Q_{f1}$) and/or one second ($Q_{f2}$) parameters, said first parameter ($Q_{f1}$) being representative of the quality of reception of the signals transmitted by said first base station ($BS_1$) and received by said first mobile station (MS) on a third frequency ($f_{1-DL}$), said second parameter ($Q_{f2}$) being representative of the quality of reception of the signals transmitted by said second base station ($BS_2$) and received by said first mobile station (MS) on a fourth frequency ($f_{2-DL}$),
   - determination, at least by said first mobile station (MS), of a third parameter ($Q_{f1\_dB}-Q_{f2\_dB}$), said third parameter being dependent on said at least one first ($Q_{f1}$) estimated parameter and/or one second ($Q_{f2}$) estimated parameter,
   - comparison of the value of said third determined parameter with a predetermined first threshold value ($T_{target\_UL}$), said first threshold value being representative of a dead zone on the uplink between said second mobile station (MS') and said second base station ($BS_2$) for at least said second frequency ($f_{2-UL}$), said dead zone being referred to as an uplink dead zone, said uplink dead zone relating to said at least one second base station ($BS_2$), and/or
   - comparison of the value of said third determined parameter with a predetermined second threshold value ($T_{target\_DL}$), said second threshold value being representative of a dead zone on the downlink between said first base station ($BS_1$) and said first mobile station (MS) for at least said third frequency ($f_{1-DL}$), said dead zone being referred to as a downlink dead zone, said downlink dead zone relating to at least said first base station ($BS_1$), and,
   - if the value of said third parameter ($Q_{f1\_dB}-Q_{f2\_dB}$) exceeds said first threshold value ($T_{target\_UL}$) and/or said second threshold value ($T_{target\_DL}$), said first mobile station interrupts the radio link implemented on at least said first frequency ($f_{1-UL}$) and/or said third frequency ($f_{1-DL}$) between said first mobile station (MS) and said first base station ($BS_1$).

2. Method according to Claim 1, **characterized in that** said first ($Q_{f1}$) and second ($Q_{f2}$) estimated parameters are expressed according to one and the same type of measurement, said type of measurement belonging to the group comprising:

   o a measurement specific (CPICH-Ec/No) to a predetermined first physical channel (CPICH) of the mean energy received per chip, divided by the power spectral density of the interference received in a corresponding radio band, referred to as a first measurement (CPICH-Ec/No);
   o a measurement (CPICH-RSCP) specific to said predetermined first physical channel (CPICH) of the power of the signal received for a predetermined code of said first physical channel (CPICH), referred to as a second measurement (CPICH-RSCP);
   o a measurement (PCCPCH-RSCP) specific to a predetermined second physical channel (PCCPCH) of the power of the signal received for a predetermined code (RSCP) of said second physical channel (PCCPCH), referred to as a third measurement (PCCPCH-RSCP); and
   o a measurement of power attenuation losses (PL) due to the propagation of the signals transmitted, referred to as a fourth measurement (PL).

3. Method according to Claim 2, **characterized in that**, said type of measurement being said fourth measurement (PL), said first threshold value ($T_{target\_UL}$) is determined in accordance with the following formula:

$$T_{target\_UL\_dB} = PL_{target\_UL\_dB} - H1_{UL\_dB} - H2_{UL\_dB}$$

$$= (EC/I0)_{UL\_dB} + I_{BS_1\_dBm} - I_{BS_2\_dBm} - x_{dB} + ACIR_{UL\_dB} - H1_{UL\_dB} -$$

$$H2_{UL\_dB};$$

where:

- $PL_{target\_UL}$ is a parameter representative of the power attenuation losses due to the propagation of the signals transmitted on the uplink determined in accordance with the following formula:

$$PL_{target\_UL\_dB} = \left(\frac{Ec}{I0}\right)_{UL\_dB} + I_{BS_1\_dBm} - I_{BS_2\_dBm} - x_{dB} + ACIR_{UL\_dB} \; ;$$

where:

-

$$\left(\frac{Ec}{I0}\right)$$

$_{UL}$ is a service quality objective on the uplink from said first mobile station (MS),
- $I_{BS_1}$ is a total level of interference on the cell served by said first base station ($BS_1$),
- $I_{BS_2}$ is a total level of interference on the cell served by said second base station ($BS_2$),
- $x$ is an uplink dead zone reduction parameter,
- $ACIR_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS_2\_dB}}{10}}) < 0 \; ;$$

where:

- $ACLR_{MS}$ is a rate of rejection on adjacent channels in transmission from said first mobile station (MS), and
- $ACS_{BS_2}$ is a rate of selectivity of adjacent channels in reception by said second base station ($BS_2$),
- $H1_{UL}$ and $H2_{UL}$ are hysteresis parameters relating to the uplink of said first ($BS_1$) and second ($BS_2$) base stations respectively, said hysteresis parameters being intended to provide a triggering margin for the calculation of said first threshold value ($T_{target\_UL}$) ; and/or

**in that** said second threshold value ($T_{arget\_DL}$) is determined in accordance with the following formula:

$$T_{target\_DL\_dB} = PL_{target\_DL\_dB} - H1_{DL\_dB} - H2_{DL\_dB}$$

$$= (Ec/I0)_{DL\_dB} + P_{T\_BS_2\_dBm} - P_{T\_DL\_dBm} + ACIR_{DL\_dB} - z_{dB} - H1_{DL\_dB} -$$

$$H2_{DL\_dB};$$

where:

- $PL_{target\_DL}$ is a parameter representative of the power attenuation losses due to the propagation of the signals transmitted on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_dB} - z_{dB} \; ;$$

where:

-
$$\left(\frac{Ec}{I0}\right)_{DL}$$

is a service quality objective on the downlink to said first mobile station (MS),
- $P_{T\_BS_2}$ is a level of total power transmitted on the cell served by said second base station ($BS_2$),
- $P_{T\_DL}$ is a maximum level of transmit power, by said first base station ($BS_1$), allowed on the downlink between said first mobile station (MS) and said first base station ($BS_1$),
- z is a downlink dead zone parameter,
- $H1_{DL}$ and $H2_{DL}$ are hysteresis parameters relating to the downlink of said first ($BS_1$) and second ($BS_2$) base stations respectively, said hysteresis parameters being intended to provide a triggering margin for the calculation of said second threshold value ($T_{target\_DL}$); and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\_dB}}{10}}) < 0 \; ;$$

where:

- $ACLR_{BS_2}$ is a rate of rejection on adjacent channels in transmission from said second base station ($BS_2$), and
- $ACS_{MS}$ is a rate of selectivity of the adjacent channels in reception by said first mobile station (MS).

4. Method according to Claim 2, **characterized in that**, said type of measurement being said third measurement (PCCPCH-RSCP) , said first threshold value ($T_{target\_UL}$) is determined in accordance with the following formula:

$$T_{target\_UL\_dB} = PCCPCH\_RSCP_{target\_UL\_dB} - H1_{UL\_dB} - H2_{UL\_dB}$$

$$= PL_{target\_UL\_dB} + TX\_PCCPCH_{BS_1\_dBm} - TX\_PCCPCH_{BS_2\_dBm} - H1_{UL\_dB} -$$

$$H2_{UL\_dB};$$

where:

- $TX\_PCCPCH_{BS_1}$ is a level of transmit power of said second physical channel (PCCPCH) from said first base station ($BS_1$),
- $TX\_PCCPCH_{BS_2}$ is a level of transmit power of said second physical channel (PCCPCH) from said second base station ($BS_2$),
- $H1_{UL}$ and $H2_{UL}$ are hysteresis parameters relating to the uplink of said first ($BS_1$) and second ($BS_2$) base stations respectively, said hysteresis parameters being intended to provide a triggering margin for the calculation of said first threshold value ($T_{target\_UL}$),
- $PL_{target\_UL}$ is a parameter representative of the power attenuation losses due to the propagation of the signals transmitted on the uplink determined in accordance with the following formula:

$$- PL_{target\_UL\_dB} = \left(\frac{EC}{I0}\right)_{UL\_dB} + I_{BS_1\_dBm} - I_{BS_2\_dBm} - x_{dB} + ACIR_{UL\_dB} \; ;$$

where:

- $$\left(\frac{Ec}{I0}\right)_{UL}$$

is a service quality objective on the uplink from said first mobile station (MS),
- $I_{BS_1}$ is a total level of interference on the cell served by said first base station ($BS_1$),
- $I_{BS_2}$ is a total level of interference on the cell served by said second base station ($BS_2$),
- x is an uplink dead zone reduction parameter,
- $ACIR_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS_2-dB}}{10}}) < 0 \;;$$

where:

- $ACLR_{MS}$ is a rate of rejection on adjacent channels in transmission from said first mobile station (MS), and
- $ACS_{BS_2}$ is a rate of selectivity of the adjacent channels in reception by said second base station ($BS_2$); and/or

**in that** said second threshold value ($T_{target\_DL}$) is determined in accordance with the following formula:

$$T_{target\_DL\_dB} = PCCPCH\_RSCP_{target\_DL\_dB} - H1_{DL\_dB} - H2_{DL\_dB}$$

$$= PL_{target\_DL\_dB} + TX\_PCCPCH_{BS_1\_dBm} - TX\_PCCPCH_{BS_2-dBm} - H1_{DL\_dB} - H2_{DL\_dB};$$

where:

- $H1_{DL}$ and $H2_{DL}$ are hysteresis parameters relating to the downlink of said first ($BS_1$) and second ($BS_2$) base stations intended to provide a triggering margin for the calculation of said second threshold value ($T_{target\_DL}$),
- $PL_{target\_DL}$ is a parameter representative of the power attenuation losses due to the propagation of the signals transmitted on the downlink determined in accordance with the following formula:

$$PL_{target\_DL\_dB} = \left(\frac{Ec}{I0}\right)_{DL\_dB} + P_{T\_BS_2-dBm} - P_{T\_DL\_dBm} + ACIR_{DL\_dB} - z_{dB};$$

where:

- $$\left(\frac{Ec}{I0}\right)_{DL}$$

is a service quality objective on the downlink to said first mobile station (MS),
- $P_{T\_BS2}$ is a level of total power transmitted on the cell served by said second base station ($BS_2$),
- $P_{T\_DL}$ is a maximum level of transmit power, by said first base station ($BS_1$), allowed on the downlink between said first mobile station (MS) and said first base station ($BS_1$),
- z is a downlink dead zone parameter, and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS2\_dB}}{10}} + 10^{\frac{-ACS_{MS\_dB}}{10}}) \;;$$

where:

- ACLR$_{BS_2}$ is a rate of rejection on adjacent channels in transmission from said second base station (BS$_2$), and
- ACS$_{MS}$ is a rate of selectivity of adjacent channels in reception by said first mobile station (MS).

**5.** Method according to Claim 2, **characterized in that**, said type of measurement being said second measurement (CPICH-RSCP), said first threshold value (T$_{target\_UL}$) is determined in accordance with the following formula:

$$T_{target\_UL\_dB} = CPICH\_RSCP_{target\_UL\_dB} - H1_{UL\_dB} - H2_{UL\_dB}$$

$$= PL_{target\_UL\_dB} + TX\_CPICH_{BS_1\_dBm} - TX\_CPICH_{BS_2\_dBm} - H1_{UL\_dB} - H2_{UL\_dB},$$

where:

- $TX\_CPICH_{BS_1}$ is a level of transmit power of said first physical channel (CPICH) from said first base station (BS$_1$),
- $TX\_CPICH_{BS_2}$ is a level of transmit power of said first physical channel (CPICH) from said second base station (BS$_2$),
- H1$_{UL}$ and H2$_{UL}$ are hysteresis parameters relating to the uplink of said first (BS$_1$) and second (BS$_2$) base stations respectively, said hysteresis parameters being intended to provide a triggering margin for the calculation of said first threshold Value (T$_{target\_UL}$),
- $PL_{target\_UL}$ is a parameter representative of the power attenuation losses due to the propagation of the signals on the uplink determined in accordance with the following formula:
-

$$PL_{target\_UL\_dB} = \left(\frac{Ec}{I0}\right)_{UL\_dB} + I_{BS_1\_dBm} - I_{BS_2\_dBm} - x_{dB} + ACIR_{UL\_dB} \; ;$$

where:

-

$$\left(\frac{Ec}{I0}\right)_{UL}$$

is a service quality objective on the uplink from said first mobile station (MS),
- I$_{BS1}$ is a total level of interference on the cell served by said first base station (BS$_1$),
- I$_{BS_2}$ is a total level of interference on the cell served by said second base station (BS$_2$),
- x is an uplink dead zone reduction parameter,
- ACIR$_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS\_dB}}{10}}) < 0 \; ;$$

where:

- ACLR$_{MS}$ is a rate of rejection on adjacent channels in transmission from said first mobile station (MS), and
- ACS$_{BS2}$ is a rate of selectivity of adjacent channels in reception by said second base station (BS$_2$); and/or

**in that** said second threshold value (T$_{target\_DL}$) is determined in accordance with the following formula:

$$T_{target\_DL\_dB} = CPICH\_RSCP_{target\_DL\_dB} - H1_{DL\_dB} - H2_{DL\_dB}$$

$$= PL_{target\_DL\_dB} + TX\_CPICH_{BS_1\_dBm} - TX\_CPICH_{BS_2\_dBm} - H1_{DL\_dB} - H2_{DL\_dB};$$

where:

- $H1_{DL}$ and $H2_{DL}$ are hysteresis parameters relating to the downlink of said first ($BS_1$) and second ($BS_2$) base stations respectively, said hysteresis parameters being intended to provide a triggering margin for the calculation of said second threshold value ($T_{target\_DL}$),
- $PL_{target\_DL}$ is a parameter representative of the power attenuation losses due to the propagation of the signals transmitted on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_dB} - z_{dB};$$

where:

-

$$\left(\frac{Ec}{I0}\right)_{DL}$$

is a service quality objective on the downlink to said first mobile station (MS),
- $P_{T\_BS_2}$ is a level of total power transmitted on the cell served by said second base station ($BS_2$),
- $P_{T\_DL}$ is a maximum level of transmit power, by said first base station ($BS_1$), allowed on the downlink between said first mobile station (MS) and said first base station ($BS_1$),
- z is a downlink dead zone parameter, and
- $ACIR_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\_dB}}{10}});$$

where:

- $ACLR_{BS_2}$ is a rate of rejection on adjacent channels in transmission from said second base station ($BS_2$), and
- $ACS_{MS}$ is a rate of selectivity of the adjacent channels in reception by said first mobile station (MS).

6. Method according to Claim 2, **characterized in that**, said type of measurement being said first measurement (CPICH-Ec/No), said first threshold value ($T_{target\_UL}$) is determined in accordance with the following formula:

$$T_{target\_UL\_dB} = CPICH\_EC/N0_{target\_UL\_dB} - H1_{UL\_dB} - H2_{UL\_dB}$$

$$= PL_{target\_UL\_dB} + TX\_CPICH_{BS_1\_dBm} - TX\_CPICH_{BS_2\_dBm} - (RSSI_{BS_1\_dBm} -$$

$$RSSI_{BS_2\_dBm}) - H1_{UL\_dB} - H2_{UL\_dB};$$

where:

- $TX\_CPICH_{BS_1}$ is a level of transmit power of said first physical channel (CPICH) from said first base station ($BS_1$),
- $TX\_CPICH_{BS_2}$ is a level of transmit power of said first physical channel (CPICH) from said second base station ($BS_2$),
- $RSSI_{BS_1}$ is a level of wideband power received from said first base station ($BS_1$),
- $RSSI_{BS_2}$ is a level of wideband power received from said second base station ($BS_2$),
- $H1_{UL}$ and $H2_{UL}$ are hysteresis parameters relating to the uplink of said first ($BS_1$) and second ($BS_2$) base

stations respectively, said hysteresis parameters being intended to provide a triggering margin for the calculation of said first threshold Value ($T_{target\_UL}$),

- $PL_{target\_UL}$ is a parameter representative of the power attenuation losses due to the propagation of the signals transmitted on the uplink determined in accordance with the following formula:

-

$$PL_{target\_UL\_dB} = \left(\frac{Ec}{I0}\right)_{UL\_dB} + I_{BS_1\_dBm} - I_{BS_2\_dBm} - x_{dB} + ACIR_{UL\_dB} \; ;$$

where:

-

$$\left(\frac{Ec}{I0}\right)_{UL}$$

is a service quality objective on the uplink from said first mobile station (MS),

- $I_{BS1}$ is a total level of interference on the cell served by said first base station ($BS_1$),
- $I_{BS2}$ is a total level of interference on the cell served by said second base station ($BS_2$),
- x is an uplink dead zone reduction parameter,
- $ACIR_{UL}$ is a rate of interference on adjacent channels on the uplink determined in accordance with the following formula:

$$ACIR_{UL\_dB} = 10 \cdot \log_{10}(10^{\frac{-ACLR_{MS\_dB}}{10}} + 10^{\frac{-ACS_{BS_2\_dB}}{10}}) < 0;$$

where:

- $ACLR_{MS}$ is a rate of rejection on adjacent channels in transmission from said first mobile station (MS), and
- $ACS_{BS_2}$ is a rate of selectivity of adjacent channels in reception by said second base station ($BS_2$); and/or

**in that** said second threshold value ($T_{target\_DL}$) is determined in accordance with the following formula:

$$T_{target\_DL\_dB} = CPICH\_EC/N0_{target\_DL\_dB} - H1_{DL\_dB} - H2_{DL\_dB}$$

$$= PL_{target\_DL\_dB} + TX\_CPICH_{BS_1\_dBm} - TX\_CPICH_{BS_2\_dB} - (RSSI_{BS_1\_dBm} -$$

$$RSSI_{BS_2\_dBm}) - H1_{DL\_dB} - H2_{DL\_dB};$$

where:

- $H1_{DL}$ and $H2_{DL}$ are hysteresis parameters relating to the downlink of said first ($BS_1$) and second ($BS_2$) base stations respectively, said hysteresis parameters being intended to provide a triggering margin for the calculation of said second threshold Value ($T_{target\_DL}$),
- $PL_{target\_DL}$ is a parameter representative of the power attenuation losses due to the propagation of the signals on the downlink determined in accordance with the following formula:

$$PL_{target\_DL\_dB} = \left(\frac{Ec}{I0}\right)_{DL\_dB} + P_{T\_BS_2\_dBm} - P_{T\_DL\_dBm} + ACIR_{DL\_dB} - z_{dB} \; ;$$

where:

-

$$\left(\frac{Ec}{I0}\right)_{DL}$$

is a service quality objective on the downlink to said first mobile station (MS),

- $P_{T\_BS_2}$ is a level of total power transmitted on the cell served by said second base station (BS$_2$),
- $P_{T\_DL}$ is a maximum level of transmit power, by said first base station (BS$_1$), allowed on the downlink between said first mobile station (MS) and said first base station (BS$_1$),
- z is a downlink dead zone parameter, and
- ACIR$_{DL}$ is a rate of interference on adjacent channels on the downlink determined in accordance with the following formula:

$$ACIR_{DL\_dB} = 10 \cdot \log_{10}(10^{\frac{-ACLR_{BS_2\_dB}}{10}} + 10^{\frac{-ACS_{MS\text{-}dB}}{10}}) \ ;$$

where:

- ACLR$_{BS_2}$ is a rate of rejection on adjacent channels in transmission from said second base station (BS$_2$), and
- ACS$_{MS}$ is a rate of selectivity of adjacent channels in reception by said first mobile station (MS).

**7.** Method according to any of Claims 3 to 6, **characterized in that** the values of said hysteresis parameters relating to the uplink and/or to the downlink of said first (BS$_1$) and second (BS$_2$) base stations are not zero.

**8.** Method according to any of Claims 3 to 7, **characterized in that** said method furthermore comprises:

- a step of storing, by said first mobile station (MS), a rate (ACLR$_{MS\_spec}$) of rejection on adjacent channels in transmission from said first mobile station (MS), said rate (ACLR$_{Ms\_spec}$) of rejection on adjacent channels being specific to said first mobile station, and a step of determination of said rate (ACIR$_{UL}$) of interference on adjacent channels on the uplink in accordance with the following formula:

$$ACIR_{UL\_dB} = 10 \cdot \log_{10}(10^{\frac{-ACLR_{MS\_spec\_dB}}{10}} + 10^{\frac{-ACS_{BS2\_dB}}{10}}) < 0;$$

where ACS$_{BS_2}$ is a rate of selectivity of adjacent channels in reception by said second base station (BS$_2$) ; and/or

- a step of storing, by said first mobile station (MS), a rate (ACS$_{MS\_spec}$) of selectivity of adjacent channels in reception by said first mobile station (MS), said rate (ACS$_{MS\_spec}$) of selectivity of adjacent channels being specific to said first mobile station (MS), and a step of determination of said rate (ACIR$_{DL}$) of interference on adjacent channels on the downlink in accordance with the following formula:

$$ACIR_{DL\_dB} = 10 \cdot \log_{10}(10^{\frac{-ACLR_{BS2\_dB}}{10}} + 10^{\frac{-ACS_{MS\_spec\_dB}}{10}}) < 0;$$

where ACLR$_{BS2\_dB}$ is a rate of rejection on adjacent channels in transmission from said second base station (BS$_2$).

**9.** Method according to any of Claims 3 to 8, **characterized in that** said first base station (BS$_1$) transmits, to said first mobile station (MS), a signal comprising at least one first configuration message for configuring said first mobile station (MS), said first configuration message comprising at least one first information element, said at least one first information element being representative of at least one parameter belonging to the group comprising:

- said service quality objective

$$\left(\frac{Ec}{I0}\right)_{UL}$$

on the uplink from said first mobile station (MS);

- said total interference level ($I_{BS_1}$) allowed on the cell served by said first base station;
- said total interference level ($I_{BS_2}$) allowed on the cell served by said second base station;
- said uplink dead zone reduction parameter (x);
- said rate ($ACLR_{MS}$) of rejection on adjacent channels by said second base station in transmission from said first mobile station (MS);
- said rate ($ACS_{BS_2}$) of selectivity of adjacent channels in reception by said second base station ($BS_2$); and
- said first threshold value ($T_{target\_UL}$); and/or

**in that** said first base station ($BS_1$) transmits, to said first mobile station (MS), a signal comprising at least one second configuration message for configuring said first mobile station (MS), said second configuration message comprising at least one second information element, said at least one second information element being representative of at least one parameter belonging to the group comprising:

- said service quality objective

$$\left(\frac{Ec}{I0}\right)_{DL}$$

on the downlink to said first mobile station (MS);
- said level ($P_{T\_BS_2}$) of total power transmitted on the cell served by said second base station ($BS_2$);
- said maximum level ($P_{T\_DL}$) of transmit power, by said first base station ($BS_1$), allowed on the downlink between said first mobile station (MS) and said first base station ($BS_1$);
- said downlink dead zone reduction parameter (z);
- said rate ($ACS_{MS}$) of selectivity of adjacent channels in reception by said first mobile station (MS) ;
- said rate ($ACLR_{BS_2}$) of rejection on adjacent channels in transmission from said second base station ($BS_2$);
- said second threshold value ($T_{target\_DL}$); and
- a second maximum threshold value ($T_{target\_DL\_Max}$).

10. Method according to Claim 8, **characterized in that** said first base station ($BS_1$) transmits, to said first mobile station (MS), a signal comprising at least one third configuration message for configuring said first mobile station, said third configuration message comprising at least one third information element, said at least one third information element being representative of a first intermediate threshold value ($T_{intermediary\_UL}$) determined in accordance with the following formula:

$$T_{intermediary\_UL\_dB} = \left(\frac{Ec}{I0}\right)_{UL\_dB} + I_{BS_1\_dBm} - I_{BS_2\_dBm\_max} - x_{dB};$$

and

- determination of said first threshold value ($T_{target\_UL}$) comprises the addition, expressed in dB, by said first mobile station (MS), of said rate ($ACIR_{UL}$) of rejection on adjacent channels on the uplink stored and of said first intermediate threshold value ($T_{intermediary\_UL}$); and/or **in that** said first base station ($BS_1$) transmits, to said first mobile station (MS), a signal comprising at least one fourth configuration message for configuring said first mobile station, said fourth configuration message comprising at least one fourth information element, said at least one fourth information element being representative of a second intermediate threshold value ($T_{intermediary\_DL}$) determined in accordance with the following formula:

$$T_{intermediary\_DL\_dB} = (Ec/I0)_{DL\_dB} + P_{T\_BS_2\_dBm} - P_{T\_DL\_dBm} - z_{dB};$$

and
- determination of said second threshold value ($T_{target\_DL}$) comprises the addition, expressed in dB, by said first mobile station (MS), of said rate ($ACIR_{DL}$) of interference on adjacent channels in reception by said first mobile station (MS), and of said second intermediate threshold value ($T_{intermediary\_DL}$).

11. Method according to Claim 8 or 10, **characterized in that** said first mobile station (MS) transmits, to said first base

station ($BS_1$), a signal comprising at least one fifth configuration message, said fifth configuration message comprising at least one fifth information element, said at least one fifth information element being representative of said stored rate ($ACLR_{MS\_spec}$) of rejection on adjacent channels specific to said first mobile station (MS), said first base station ($BS_1$) determines said first threshold value ($T_{target\_UL}$) as a function of said specific rate ($ACLR_{MS\_spec}$) of rejection on adjacent channels, and transmits said first threshold value ($T_{target\_UL}$) to said first mobile station (MS); and/or

**in that** said first mobile station (MS) transmits, to said first base station ($BS_1$), a signal comprising at least one sixth configuration message, said sixth configuration message comprising at least one sixth information element, said at least one sixth information element being representative of said rate ($ACS_{MS\_spec}$) of selectivity of adjacent channels specific to said first mobile station (MS), said first base station ($BS_1$) determines said second threshold value ($T_{target\_DL}$) as a function of said specific rate ($ACS_{MS\_spec}$) of selectivity of adjacent channels, and transmits said second threshold value ($T_{target\_DL}$) to said first mobile station (MS).

**12.** Method according to any of the preceding claims, **characterized in that** at least said first ($T_{target\_UL}$) threshold value and/or said second ($T_{target\_DL}$) threshold value is split into at least first ($T_{1\_target\_UL}$,$T_{1\_target\_DL}$) and/or second ($T_{2\_target\_UL}$,$T_{2\_target\_DL}$) partial threshold values relating to said first ($BS_1$) and second ($BS_2$) base stations respectively, and whose difference, expressed in dB, is equal to said first ($T_{target\_UL}$) and/or second ($T_{target\_DL}$) threshold values respectively,

and **in that** said first base station ($BS_1$) transmits, to said first mobile station (MS), a signal comprising at least one seventh configuration message for configuring said first mobile station, said seventh configuration message comprising at least one seventh information element, said at least one seventh information element being representative of at least one parameter belonging to the group comprising:

- said first partial threshold value ($T_{1\_target\_UL\_dB}$) relating to the uplink dead zone relating to said second base station ($BS_2$);
- said first partial threshold value ($T_{1\_target\_DL\_dB}$) relating to the downlink dead zone relating to said first base station ($BS_1$);
- said second partial threshold value ($T_{2\_target\_UL}$) relating to the uplink dead zone relating to said second base station ($BS_2$);
- said second partial threshold value ($T_{2\_target\_DL\_dB}$) relating to the downlink dead zone relating to said first base station ($BS_1$);
- a first maximum partial threshold value ($T_{1target\_UL\_Max}$) relating to the uplink dead zone relating to said second base station ($BS_2$);
- a first maximum partial threshold value ($T_{1target\_DL\_Max}$) relating to the downlink dead zone relating to said first base station ($BS_1$).

**13.** Method according to Claim 12, **characterized in that**, said seventh configuration message comprising said first maximum partial threshold value ($T_{1target\_UL\_Max}$) relating to the uplink dead zone relating to said second base station ($BS_2$),
said method comprises the following steps of:

- providing said first mobile station (MS) with said first threshold value ($T_{target\_UL}$);
- utilization, by said first mobile station (MS), of said first maximum partial threshold value ($T_{1target\_UL\_Max}$) relating to the uplink dead zone relating to said second base station ($BS_2$) as first partial threshold value ($T_{1\_target\_UL}$) relating to the uplink dead zone relating to said second base station ($BS_2$);
- determination, by said first mobile station (MS), of said second partial threshold value ($T_{2\_target\_UL}$) relating to the uplink dead zone relating to said second base station ($BS_2$); and/or

**in that**, said seventh configuration message comprising said first maximum partial threshold value ($T_{1target\_DL\_Max}$) relating to the downlink dead zone relating to said first base station ($BS_1$), said method comprises the following steps of:

- providing said first mobile station (MS) with said second threshold value ($T_{target\_DL}$);
- utilization, by said first mobile station (MS), of said first maximum partial threshold value ($T_{1target\_DL\_Max}$) relating to the downlink dead zone relating to said first base station ($BS_1$) as first partial threshold value ($T_{1\_target\_DL}$) relating to the downlink dead zone relating to said first base station ($BS_1$) ;
- determination, by said first mobile station (MS), of said second partial threshold value ($T_{2\_target\_DL}$) relating to the downlink dead zone relating to said first base station ($BS_1$).

**14.** Method according to Claim 12 or 13, **characterized in that** said comparison step comprises the comparison of the value of said first and second parameters ($Q_{f1}$, $Q_{f2}$) with said first ($T_{1\_target\_UL}$ or $T_{1\_target\_DL}$) and second ($T_{2\_target\_UL}$ or $T_{2\_target\_DL}$) partial threshold values respectively, said radio link implemented on at least said first frequency ($f_{1-UL}$) and/or said third frequency ($f_{1-DL}$) between said first mobile station (MS) and said first base station ($BS_1$) being interrupted:

- when the value of said first parameter ($Q_{f1}$) is less than said first partial threshold value ($T_{1\_target\_DL\_dB}$) relating to said downlink dead zone relating to said first base station ($BS_1$) and the value of said second parameter ($Q_{f2}$) is greater than said second partial threshold value ($T_{2\_target\_DL\_dB}$) relating to said downlink dead zone relating to said first base station ($BS_1$), and/or
- when the value of said first parameter ($Q_{f1}$) is less than said first partial threshold value ($T_{1\_target\_UL}$) relating to the uplink dead zone relating to said second base station ($BS_2$) and the value of said second parameter ($Q_{f2}$) is greater than said second partial threshold value ($T_{2\_target\_UL}$) relating to the uplink dead zone relating to said second base station ($BS_2$).

**15.** Method according to any of Claims 12 to 14, **characterized in that**, to carry out said comparison step, said first base station ($BS_1$) transmits, beforehand, to said first mobile station (MS), a signal comprising an eighth configuration message for configuring said first mobile station (MS), said eighth configuration message comprising at least one eighth information element, said at least one eighth information element being representative of at least one event relating to the interruption of said radio link between said first mobile station (MS) and said first base station ($BS_1$), said at least one event belonging to the group comprising:

- an event of type 1e,
- an event of type 1f,
- an event of type 2a,
- an event of type 2b,
- an event of type 2c, and
- an event of type 2d.

**16.** Method according to any of the preceding claims, **characterized in that**, to interrupt said radio link between said first mobile station (MS) and said first base station ($BS_1$), said first mobile station (MS) triggers a radio link failure procedure.

**17.** Method according to any of the preceding claims, **characterized in that** said first mobile station (MS) interrupts said radio link with said first base station ($BS_1$) following the receipt of a signal, said signal comprising at least one ninth configuration message for configuring said first mobile station, said ninth configuration message comprising at least one ninth information element, said at least one ninth information element allowing said first mobile station (MS) to interrupt said radio link.

**18.** Method according to Claim 15, **characterized in that** said method comprises, after the transmission of the signal comprising said eighth configuration message and before the interruption of the radio link between said first base station ($BS_1$) and said first mobile station (MS), a step comprising:

- transmission, from said first base station ($BS_1$) to said first mobile station (MS), of at least one message belonging to the group comprising:

  - a radio bearer reconfiguration message;
  - a radio bearer release message;
  - a transport channel reconfiguration message; and
  - a physical channel reconfiguration message.

**19.** Method according to Claim 16 or 17, itself dependent on Claim 16, **characterized in that**, to trigger said radio link failure procedure, said first base station ($BS_1$) transmits, beforehand, to said first mobile station (MS), a signal comprising a tenth configuration message, said tenth configuration message comprising at least one tenth information element, the value of said at least one tenth information element being representative of the trigger action or of the non-trigger action of said radio link failure procedure.

**20.** Method according to Claim 19, **characterized in that** said tenth configuration message comprises, furthermore, at least one eleventh information element, the value of said at least one eleventh information element being representative of the type of said at least one event triggering said radio link failure procedure.

21. Method according to any of Claims 15 to 18, itself dependent on Claim 15, **characterized in that** the transmission to said first mobile station (MS) of said eighth configuration message relating to at least one event is carried out, if and only if, said first mobile station (MS) is present in a zone which is potentially an uplink dead zone relating to said second base station ($BS_2$) and/or a downlink dead zone relating to said first base station ($BS_1$).

22. Method according to any of the preceding claims, **characterized in that**, before interrupting said radio link between said first mobile station (MS) and said first base station ($BS_1$), said first mobile station (MS) transmits, to said first base station ($BS_1$), at least said first and second estimated parameters ($Q_{f1}$,$Q_{f2}$) representative of the qualities of reception of the signals transmitted from said first ($BS_1$) and second ($BS_2$) base stations to said first mobile station (MS) on said third ($f_{1-DL}$) and fourth ($f_{2-DL}$) frequencies.

23. Mobile telecommunication system comprising a plurality of base stations and of mobile stations, in which at least one base station and at least one mobile station implement in order to communicate a frequency division duplex mode and/or the wideband code division multiple access technology, **characterized in that** said mobile telecommunication system implements said method of reducing at least one dead zone relative to a first base station ($BS_1$) and/or at least one second base station ($BS_2$) according to any of the preceding claims.

24. Mobile station (MS), referred to as a first mobile station, of the type comprising means for communicating with at least one first base station ($BS_1$) on at least one first frequency ($f_{1-UL}$), at least one second base station ($BS_2$) being next to said first base station ($BS_1$), said first base station being comprised within a first access network, said second base station being comprised within a second access network, said first and second access networks being separate and independent, **characterized in that**, at least one other mobile station (MS'), referred to as a second mobile station, communicating with said second base station ($BS_2$) on at least one second frequency ($f_{2\_UL}$), said first mobile station comprises means of:

- estimation of at least one first ($Q_{f1}$) and/or one second ($Q_{f2}$) parameters, said first parameter ($Q_{f1}$) being representative of the quality of reception of the signals transmitted by said first base station ($BS_1$) and received by said first mobile station (MS) on a third frequency ($f_{1-DL}$), said second parameter ($Q_{f2}$) being representative of the quality of reception of the signals transmitted by said second base station ($BS_2$) and received by said first mobile station (MS) on a fourth frequency ($f_{2\_DL}$),
- determination of a third parameter ($Q_{f1\_dB}$-$Q_{f2\_dB}$), said third parameter being dependent on said at least one first ($Q_{f1}$) estimated parameter and/or one second ($Q_{f2}$) estimated parameter,
- comparison of the value of said third determined parameter with a predetermined first threshold value ($T_{target\_UL}$), said first threshold value being representative of a dead zone on the uplink between said second mobile station (MS') and said second base station ($BS_2$) for at least said second frequency ($f_{2-UL}$), said dead zone being referred to as a uplink dead zone, said uplink dead zone relating to said at least one second base station ($BS_2$), and/or
- comparison of the value of said third determined parameter with a predetermined second threshold value ($T_{target\_DL}$), said second threshold value being representative of a dead zone on the downlink between said first base station ($BS_1$) and said first mobile station (MS) for at least said third frequency ($f_{1-DL}$), said dead zone being referred to as a downlink dead zone, said downlink dead zone relating to at least said first base station ($BS_1$), and,
- if the value of said third parameter ($Q_{f1\_dB}$-$Q_{f2\_dB}$) exceeds said first threshold value ($T_{target\_UL}$) and/or said second threshold value ($T_{target\_DL}$), said first mobile station interrupts the radio link implemented on at least said first frequency ($f_{1-UL}$) and/or said third frequency ($f_{1-DL}$) between said first mobile station (MS) and said first base station ($BS_1$).

25. Mobile station (MS) according to Claim 24, **characterized in that** said first mobile station (MS) furthermore comprises:

- means of storing a rate ($ACLR_{MS\_spec}$) of rejection on adjacent channels in transmission by said first mobile station (MS), said rate ($ACLR_{MS\_spec}$) of rejection on adjacent channels being specific to said first mobile station (MS); and/or
- means of storing a rate ($ACS_{MS\_spec}$) of selectivity of adjacent channels in reception by said first mobile station (MS), said rate ($ACS_{MS\_spec}$) of selectivity of adjacent channels being specific to said first mobile station (MS).

FIG.1

BS1

$P_{T-DL}$= maximum transmit power allowed on the downlink

$P_{T-MS}$= maximum transmit power allowed on the uplink

$P_{T\_BS1}$= total transmit power

$f_{1-UL}$

$f_{1-DL}$

$PL_1$

MS'

$f_{2-UL}$

$f_{2-DL}$

BS2

$PL_2$

$P_{T-BS2}$

MS

Uplink dead zone of base station BS2

· Blinding zone of base station BS2

Downlink dead zone of base station BS2

Uplink dead zone of base station BS1

**FIG.2**

$$\left(\frac{Ec}{I0}\right)_{UL\_dB}$$

$I_{BS1\_dBm}$

$ACLR_{MS}$

$I_{BS2\_dBm}$

$x_{dB}$

Operator 1      Operator 2

Calculation of

$$PL_{target\_dB\_UL} = \left(\frac{Ec}{I0}\right)_{UL\_dB} + I_{BS1\_dBm} - I_{BS2\_dBm} - x_{dB} - ACLR_{MS}$$

Calculation of

$PL_{1\_target\_dB\_UL}$ and $PL_{2\_target\_dB\_UL}$ such that $PL_{1\_target\_dB\_UL} - PL_{2\_target\_dB\_UL} = PL_{target\_dB\_UL}$

OR

Transmission of
event 2b with

$T_{used} = PL_{1\_target\_dB\_UL}$

$T_{nonused} = PL_{2\_target\_dB\_UL}$

Transmission of
event 2c with

$T_{nonused} = PL_{2\_target\_dB\_UL}$

Transmission of
event 2d with

$T_{used} = PL_{1\_target\_dB\_UL}$

EP 1 418 778 A1

## FIG.3

Operator 1:

$$\left(\frac{Ec}{I0}\right)_{DL\_dB} \qquad z_{dB} \qquad P_{T\_DL\_dBm} \qquad ACS_{MS} \qquad P_{T\_BS2\_dBm}$$

Operator 2

Calculation of

$$PL_{t\arg et\_dB\_DL} = \left(\frac{Ec}{I0}\right)_{DL\_dB} + P_{T\_BS2\_dBm} - P_{T\_DL\_dBm} - ACS_{MS} - z_{dB}$$

Calculation of

$PL_{1\_t\arg et\_dB\_DL}$ and $PL_{2\_t\arg et\_dB\_DL}$ such that $PL_{1\_t\arg et\_dB\_DL} - PL_{2\_t\arg et\_dB\_DL} = PL_{t\arg et\_dB\_DL}$

OR

Transmission of
event 2b with

$T_{used} = PL_{1\_t\arg et\_dB\_DL}$

$T_{nonused} = PL_{2\_t\arg et\_dB\_LD}$

Transmission of
event 2c with

$T_{nonused} = PL_{2\_t\arg et\_dB\_DL}$

Transmission of
event 2d with

$T_{used} = PL_{1\_t\arg et\_dB\_DL}$

START

Threshold values of the
uplink and/or downlink
received ?

NO

YES

At least one event for the
uplink and/or downlink
received ?

NO

YES

Updating of events
with threshold values

Event triggered on the
uplink and/or downlink ?

NO

YES

Transmission of a measurement report

**FIG.4**

Message for activating
the radio link failure
procedure received
previously ?

NO

YES

Radio link failure

**European Patent Office**

## EUROPEAN SEARCH REPORT

Application Number

EP 03 36 4029

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 594 946 A (MENICH BARRY J ET AL) 14 January 1997 (1997-01-14) * column 1, line 7 - line 18 * * column 1, line 55 - column 2, line 2 * * column 3, line 30 - column 4, line 36 * * column 7, line 34 - line 60 * * column 7, line 48 - column 8, line 58 * * figure 1 * | 1,2,16, 17,22-24 | H04Q7/36 |
| A | | 3-15, 18-21,25 | |
| A | WO 99 14972 A (HAEMAELAEINEN SEPPO ;NOKIA MOBILE PHONES LTD (FI); LAAKSONEN NIINA) 25 March 1999 (1999-03-25) * abstract * * page 6, line 1 - line 18 * | 1-25 | |
| A | WO 02 30135 A (WARD TORBJORN ;WALLSTEDT YNGVE KENNETH (US); ERICSSON INC (US)) 11 April 2002 (2002-04-11) * abstract * * page 6, line 1 - line 16 * * page 9, line 3 - line 19 * * page 10, line 17 - page 13, line 25 * | 1-25 | TECHNICAL FIELDS SEARCHED (Int.Cl.7) H04Q |

The present search report has been drawn up for all claims

| Place of search | Date of completion of the search | Examiner |
|---|---|---|
| BERLIN | 4 March 2004 | Alonso Maleta, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 36 4029

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2004

| Patent document cited in search report | | Publication date | Patent family member(s) | | Publication date |
|---|---|---|---|---|---|
| US 5594946 | A | 14-01-1997 | AU | 678943 B2 | 12-06-1997 |
| | | | AU | 5414796 A | 18-09-1996 |
| | | | CA | 2187326 A1 | 06-09-1996 |
| | | | DE | 69629773 D1 | 09-10-2003 |
| | | | EP | 0758505 A1 | 19-02-1997 |
| | | | FI | 964292 A | 25-10-1996 |
| | | | IL | 116868 A | 12-03-1999 |
| | | | JP | 9512694 T | 16-12-1997 |
| | | | WO | 9627246 A1 | 06-09-1996 |
| WO 9914972 | A | 25-03-1999 | FI | 973718 A | 18-03-1999 |
| | | | AU | 755463 B2 | 12-12-2002 |
| | | | AU | 9267798 A | 05-04-1999 |
| | | | BR | 9803438 A | 03-11-1999 |
| | | | CA | 2304050 A1 | 25-03-1999 |
| | | | CN | 1211887 A | 24-03-1999 |
| | | | EP | 1038411 A2 | 27-09-2000 |
| | | | WO | 9914972 A2 | 25-03-1999 |
| | | | US | 6363252 B1 | 26-03-2002 |
| WO 0230135 | A | 11-04-2002 | AU | 9465901 A | 15-04-2002 |
| | | | WO | 0230135 A2 | 11-04-2002 |

EPO FORM P0459

For more details about this annex : see Official Journal of the European Patent Office, No. 12/82